(19) Europäisches Patentamt / European Patent Office / Office européen des brevets

(11) **EP 4 745 165 A1**

(12) **EUROPEAN PATENT APPLICATION**
published in accordance with Art. 153(4) EPC

(43) Date of publication:
**20.05.2026 Bulletin 2026/21**

(21) Application number: **24839575.8**

(22) Date of filing: **01.07.2024**

(51) International Patent Classification (IPC):
**C08F 10/02** (2006.01)    **D01F 6/04** (2006.01)

(52) Cooperative Patent Classification (CPC):
**C08F 10/02; D01F 6/04**

(86) International application number:
**PCT/JP2024/023800**

(87) International publication number:
**WO 2025/013683 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 JP 2023113653**

(71) Applicant: **ASAHI KASEI KABUSHIKI KAISHA Tokyo 100-0006 (JP)**

(72) Inventors:
• **UOMI, Masahide**
  **Tokyo 100-0006 (JP)**
• **TSUJIMOTO, Koichi**
  **Tokyo 100-0006 (JP)**

(74) Representative: **D Young & Co LLP 3 Noble Street London EC2V 7BQ (GB)**

(54) **ULTRA-HIGH MOLECULAR WEIGHT POLYETHYLENE POWDER AND MOLDED ARTICLE**

(57)    An ultrahigh-molecular-weight polyethylene powder
having intrinsic viscosity IV of 12.0 dL/g or more and 35.0 dL/g or less, and
having a mobility index of 57 ms or more and 73 ms or less, as determined from the following (formula I):

$$[\text{Mobility Index}] = T\alpha \times R\alpha/(R\alpha + R\beta) + T\beta \times R\beta/(R\alpha + R\beta) \quad (\text{Formula I})$$

wherein
$T\alpha$ represents a relaxation time (ms) of a low-mobility component $\alpha$,
$R\alpha$ represents an abundance proportion of the low-mobility component $\alpha$,
$T\beta$ represents a relaxation time (ms) of an intermediate component $\beta$,
$R\beta$ represents an abundance proportion of the intermediate component $\beta$, and
the $T\alpha$, $R\alpha$, $T\beta$ and $R\beta$ are values obtained by approximating a free induction decay curve obtained by the Carr Purcell Meiboom Gill method with pulse NMR, to three components of the low-mobility component $\alpha$, the intermediate component $\beta$ and a high-mobility component $\gamma$.

**Description**

**Technical Field**

The present invention relates to an ultrahigh-molecular-weight polyethylene powder and a molded article.

**Background Art**

Polyethylene is employed in a wide variety of uses such as films, sheets, microporous membranes, fibers, foams, and pipes. Polyethylene is used because melt processing is easy and the obtained molded article has high mechanical strength and is also excellent in chemical resistance, rigidity, etc. Among others, ultrahigh-molecular-weight polyethylene has higher mechanical strength because of its large molecular weight and is excellent in slidability and abrasion resistance and also excellent in chemical stability and long-term reliability.

The ultrahigh-molecular-weight polyethylene has low fluidity even if melted at a temperature equal to or higher than a melting point. Therefore, a method is commonly used which includes adding a solvent such as liquid paraffin or decalin to the ultrahigh-molecular-weight polyethylene powder and processing the resultant into a slurry.

For example, a method of Patent Literature 1 is disclosed from the viewpoint of improvement in extrusion processability of the ultrahigh-molecular-weight polyethylene and improvement in strength of a molded article. Patent Literature 1 discloses an easily-processable high-strength molded article obtained by controlling the pore volume and the pore size of a polyethylene powder which is less changed in molecular weight under specific kneading conditions and which is large in particle size, to proper ranges.

**Citation List**

**Patent Literature**

Patent Literature 1: WO2019/187727

**Summary of Invention**

**Technical Problem**

In order to obtain a high-strength molded article by improvement of drawing processability of ultrahigh-molecular-weight polyethylene, molecular chains need to be sufficiently disentangled. When molecular chains are not sufficiently disentangled, a problem is that the shear stress during kneading leads to cleavage of molecular chains and then reduction of the molecular weight, thereby providing high orientation, but deteriorating strength.

Patent Literature 1 provides a polyethylene powder by focusing on control of the pore volume and the pore size of a polyethylene powder large in particle size, to proper ranges, and thus disentanglement of molecular chains, but does not provide any description about improvement of strength of thread by reduction of the amount of entanglement of the polyethylene powder itself regardless of the particle size, and has room for improvement.

The present invention has been made in light of the circumstances described above, and an object of the present invention is to obtain a high-strength fiber with less reduction of the molecular weight and less thread breakage even in high-speed winding, in gel spinning of an ultrahigh-molecular-weight polyethylene powder.

**Solution to Problem**

The present inventor has pursued diligent studies to attain the object and consequently completed the present invention by finding that the object can be attained by particularly controlling entanglement (mobility) of an ultrahigh-molecular-weight polyethylene powder in liquid paraffin.

Specifically, the present invention is as follows:

[1] An ultrahigh-molecular-weight polyethylene powder,

having intrinsic viscosity IV of 12.0 dL/g or more and 35.0 dL/g or less, and
having a mobility index of 57 ms or more and 73 ms or less, as determined from the following (formula I):

$$[\text{Mobility Index}] = T\alpha \times R\alpha/(R\alpha + R\beta) + T\beta \times R\beta/(R\alpha + R\beta) \text{ (Formula I)}$$

wherein

Tα represents a relaxation time (ms) of a low-mobility component α,
Rα represents an abundance proportion of the low-mobility component α,
Tβ represents a relaxation time (ms) of an intermediate component β,
Rβ represents an abundance proportion of the intermediate component β, and
the Tα, Rα, Tβ and Rβ are values obtained by approximating a free induction decay curve obtained by the Carr Purcell Meiboom Gill method with pulse NMR, to three components of the low-mobility component α, the intermediate component β and a high-mobility component γ.

[2] The ultrahigh-molecular-weight polyethylene powder according to [1], having a degree of entanglement of 0.6 or more and 2.8 or less, as determined from the following (formula II):

$$[\text{Degree of Entanglement}] = R\beta/R\alpha \text{ (Formula II)}$$

wherein Rβ and Rα are as described in [1].

[3] The ultrahigh-molecular-weight polyethylene powder according to [1] or [2], satisfying a relationship of the following (formula III):

$$[\text{Mobility Index}] > -0.2 \times [\text{Intrinsic Viscosity IV}] + 62 \text{ (Formula III)}.$$

[4] The ultrahigh-molecular-weight polyethylene powder according to any one of [1] to [3], wherein a content of a constituent unit derived from an olefin copolymerizable with ethylene, as measured by $^{13}$C-NMR, is 0.1 mol% or less.

[5] The ultrahigh-molecular-weight polyethylene powder according to any one of [1] to [4], having D50 of 40 μm or more and 400 μm or less, as measured with a laser diffraction type particle size distribution measurement apparatus.

[6] The ultrahigh-molecular-weight polyethylene powder according to any one of [1] to [5], having intrinsic viscosity IV of 17.0 dL/g or more and 33.0 dL/g or less.

[7] The ultrahigh-molecular-weight polyethylene powder according to any one of [1] to [6], having a mobility index of 64 ms or more and 73 ms or less.

[8] The ultrahigh-molecular-weight polyethylene powder according to any one of [1] to [7], wherein

a content of titanium (Ti) is 10 ppm or less, and

a content of aluminum (Al) is 10 ppm or less.

[9] The ultrahigh-molecular-weight polyethylene powder according to any one of [1] to [8], for a high-strength fiber.

[10] A molded article of the ultrahigh-molecular-weight polyethylene powder according to any one of [1] to [9].

[11] The molded article according to [10], wherein
the molded article is a fiber.

[12] A method for producing a high-strength fiber, comprising:

a slurry preparing step of mixing an ultrahigh-molecular-weight polyethylene powder and first liquid paraffin, and stirring the resulting mixture at a temperature equal to or lower than a melting point of the ultrahigh-molecular-weight polyethylene powder to thereby obtain a slurry;

a gelling step of mixing the slurry and second liquid paraffin having a temperature of 150°C or more and 300°C or less to obtain a gel for a yarn having a temperature of 140°C or more and 200°C or less;

an extruding step of extruding the gel for a yarn to obtain a yarn;

an extracting step of extracting the first liquid paraffin and the second liquid paraffin from the yarn to obtain a yarn for drawing; and

a yarn drawing step of thermally drawing the yarn for drawing, wherein

the ultrahigh-molecular-weight polyethylene powder has intrinsic viscosity IV of 12.0 dL/g or more and 35.0 dL/g or less, and

the ultrahigh-molecular-weight polyethylene powder has a mobility index of 57 ms or more and 73 ms or less, as determined from the following (formula I):

$$[\text{Mobility Index}] = T\alpha \times R\alpha/(R\alpha + R\beta) + T\beta \times R\beta/(R\alpha + R\beta) \quad (\text{Formula I})$$

wherein

$T\alpha$ represents a relaxation time (ms) of a low-mobility component $\alpha$,

$R\alpha$ represents an abundance proportion of the low-mobility component $\alpha$,

$T\beta$ represents a relaxation time (ms) of an intermediate component $\beta$,

$R\beta$ represents an abundance proportion of the intermediate component $\beta$, and

the $T\alpha$, $R\alpha$, $T\beta$ and $R\beta$ are values obtained by approximating a free induction decay curve obtained by the Carr Purcell Meiboom Gill method with pulse NMR, to three components of the low-mobility component $\alpha$, the intermediate component $\beta$ and a high-mobility component $\gamma$.

[13] The method for producing a high-strength fiber according to [12], comprising a kneading step of kneading the gel for a yarn before the extruding step.

[14] The method for producing a high-strength fiber according to [12] or [13], wherein

a stirring temperature is 25°C or more and 120°C or less in the slurry preparing step, and

a polyethylene concentration in the gel for a yarn is 3% by mass or more and 20% by mass or less in the gelling step.

[15] The method for producing a high-strength fiber according to [13] or [14], wherein
the kneading step is performed at a temperature of 140°C or more and 200°C or less, at a time for 5 minutes or more and 180 minutes or less, and at a rotational speed of 3 rpm or more and 50 rpm or less.

[16] The method for producing a high-strength fiber according to any one of [12] to [15], comprising a rapidly cooling step after the extruding step, wherein

a time from the extruding step to the rapidly cooling step is 0 second or more and 10 seconds or less, and

a temperature in the rapidly cooling step is 5°C or more and 30°C or less.

[17] The method for producing a high-strength fiber according to any one of [12] to [16], comprising an extrusion preparation step before the extruding step, wherein

a temperature in the extrusion preparation step is 140°C or more and 200°C or less, and
a time of the extrusion preparation step is 5 minutes or more and 90 minutes or less.

[18] The method for producing a high-strength fiber according to any one of [12] to [17], wherein
in the extruding step, an extrusion rate is 5 mm/min or more and 20 mm/min or less, a winding rate is 200 mm/min or more and 1600 mm/min or less, a discharge amount is 0.2 g/min or more and 1.5 g/min or less, and a spinning diameter is 0.8 mm or more and 1.5 mm or less.

[19] The method for producing a high-strength fiber according to any one of [12] to [18], wherein

an extraction solvent is used in the extracting step,
the extraction solvent is hexane or dichloromethane, and
a time of the extraction is 3 hours or more and 24 hours or less.

[20] The method for producing a high-strength fiber according to any one of [12] to [19], wherein multistage drawing is performed in the yarn drawing step.

[21] The method for producing a high-strength fiber according to [20], wherein the multistage drawing is two-stage drawing.

[22] The method for producing a high-strength fiber according to [21], wherein

the two-stage drawing includes a primary drawing step and a secondary drawing step,
in the primary drawing step, a feeding rate is 50 mm/min or more and 200 mm/min or less, a winding rate is 1000 mm/min or more and 4000 mm/min or less, and a temperature is 110°C or more and 155°C or less, and
in the secondary drawing step, a feeding rate is 50 mm/min or more and 200 mm/min or less, a winding rate is 100 mm/min or more and 500 mm/min or less, and a temperature is 130°C or more and 155°C or less.

**Advantageous Effect of Invention**

According to the present invention, an ultrahigh-molecular-weight polyethylene powder can be provided which allows a high-strength fiber having good drawability to be obtained by causing less reduction in molecular weight to provide a homogeneous gel during kneading.

**Description of Embodiments**

Hereinafter, a mode for carrying out the present invention (hereinafter, simply referred to as the "present embodiment") will be described in detail. However, the present invention is not intended to be limited by the present embodiment. Various changes or modifications can be made in the present invention within the spirit thereof.

[Ultrahigh-molecular-weight polyethylene powder]

The ultrahigh-molecular-weight polyethylene powder (hereinafter, also simply referred to as "polyethylene powder" or "powder".) of the present embodiment has intrinsic viscosity IV of 12.0 dL/g or more and 35.0 dL/g or less, preferably 17.0 dL/g or more and 33.0 dL/g or less, more preferably 20.9 dL/g or more and 31.0 dL/g or less.
The intrinsic viscosity IV in the present embodiment refers to intrinsic viscosity determined from the specific viscosity of a polymer solution.
The ultrahigh-molecular-weight polyethylene powder of the present embodiment has better strength when having the intrinsic viscosity IV equal to or more than the lower limit, and has better moldability when having the intrinsic viscosity IV equal to or less than the upper limit.
The ultrahigh-molecular-weight polyethylene powder of the present embodiment is preferably a powder consisting of an ethylene homopolymer and/or a copolymer of ethylene and an olefin (hereinafter, also referred to as a comonomer), copolymerizable with ethylene (hereinafter, the homopolymer and the copolymer are also collectively referred to as the "ethylene polymer").
Specific examples of an olefin copolymerizable with ethylene include, but are not particularly limited to, at least one comonomer selected from the group consisting of $\alpha$-olefins having 3 or more and 15 or less carbon atoms, cyclic olefins having 3 or more and 15 or less carbon atoms, compounds represented by the formula $CH_2=CHR^1$ (wherein $R^1$ is an aryl group having 6 to 12 carbon atoms), and linear, branched, or cyclic dienes having 3 or more and 15 or less carbon atoms. Among them, an $\alpha$-olefin having 3 or more and 15 or less carbon atoms is preferred.
Examples of the $\alpha$-olefin include, but are not particularly limited to, propylene, 1-butene, 4-methyl-1-pentene, 1-hexene, 1-octene, 1-nonene, 1-decene, 1-undecene, 1-dodecene, 1-tridecene, and 1-tetradecene.
The comonomer content in the ultrahigh-molecular-weight polyethylene powder of the present embodiment, as measured by $^{13}C$-NMR, is preferably 0.1 mol% or less, more preferably 0.05 mol% or less, and further preferably 0.02 mol% or less. The comonomer content within the range described above in the ultrahigh-molecular-weight polyethylene powder of the present embodiment tends to realize suppression of decomposition and tends to allow a molded article obtained by molding the ultrahigh-molecular-weight polyethylene powder to be improved in strength. The method for measuring the comonomer content is as described in Examples mentioned later.

The ultrahigh-molecular-weight polyethylene powder of the present embodiment may be obtained by using, as a raw material, ethylene produced from, for example, biomass-derived naphtha or biomass-derived ethanol. For example, the biomass-derived ultrahigh-molecular-weight polyethylene powder described above can be produced by cracking biomass-derived naphtha used as a raw material.

[Intrinsic Viscosity IV]

The intrinsic viscosity IV of the ultrahigh-molecular-weight polyethylene powder of the present embodiment is as described above.

The method for controlling the intrinsic viscosity IV to the range mentioned above is not particularly limited and involves, for example, changing the polymerization temperature of a reactor where ethylene is homopolymerized or where ethylene and an olefin, copolymerizable therewith are copolymerized. The intrinsic viscosity IV tends to be lower as the polymerization temperature is higher, and tends to be higher as the polymerization temperature is lower.

Another method for controlling the intrinsic viscosity IV to the range mentioned above is not particularly limited and involves, for example, changing the type of an organic metal compound for use as a promoter in the homopolymerization of ethylene or the copolymerization of ethylene and an olefin, copolymerizable therewith.

A further alternative method for controlling the intrinsic viscosity IV to the range mentioned above is not particularly limited and involves, for example, adding a chain transfer agent in the homopolymerization of ethylene or the copolymerization of ethylene and an olefin, copolymerizable therewith.

The chain transfer agent is not particularly limited, and is, for example, hydrogen, ethylene, or an $\alpha$-olefin. The addition of the chain transfer agent tends to decrease the intrinsic viscosity IV of the ultrahigh-molecular-weight polyethylene to be produced even at the same polymerization temperature.

In the present embodiment, the intrinsic viscosity IV can be determined by a method described in Examples mentioned later.

[Mobility Index and Degree of Entanglement of Ultrahigh-molecular-weight Polyethylene Powder]

A known index for presuming entanglement of molecular chains in a polyethylene powder is, for example, evaluation of dynamic viscoelasticity.

Evaluation of dynamic viscoelasticity involves evaluating the level of entanglement from the response during application of stress to a resin, and therefore can determine the average level of entanglement in the entire resin. However, in the case of concurrent control of a plurality of physical properties including mechanical characteristics and molding processability, it is preferable to separately handle a plurality of entanglement components present in the resin, and therefore not only the average level of entanglement is insufficient when used singly, but also evaluation of dynamic viscoelasticity is generally made with a press molded product and thus is not suitable for evaluating entanglement in a polyethylene powder.

An ultrahigh-molecular-weight polyethylene powder has a very high molecular weight and exhibits strong entanglement of molecular chains as suggested by the name. When the intrinsic viscosity IV is 12.0 dL/g or more as in the ultrahigh-molecular-weight polyethylene powder of the present embodiment, strong entanglement of molecular chains tends to be remarkably observed. Since too strong entanglement of molecular chains makes melt processing difficult, a slurry formed by adding a solvent to such a polyethylene powder is molded and processed.

The present inventor has found that the level of entanglement in a polyethylene powder in liquid paraffin can be measured in <Slurry Mobility Measurement Conditions> later and thus accurately evaluated by adopting the mobility index of a polyethylene slurry calculated by pulse NMR measurement of the slurry at 150°C (hereinafter, also referred to as "mobility index".) as an index capable of evaluating an entanglement component in a polyethylene powder in a solvent, in order to assess a raw material suitable for a molded article in which physical properties including mechanical characteristics and molding processability are well controlled. It has been further found that the level of entanglement in a polyethylene powder in liquid paraffin can be more accurately evaluated by calculating not only the mobility index, but also the degree of entanglement of the slurry (hereinafter, also referred to as "degree of entanglement".).

The pulse NMR measurement is performed by using the Carr Purcell Meiboom Gill method which is a measurement method suitable for mobility evaluation of a polymer in which molecular chains actively move (rubber state or the like).

As a result, it has been found that, when a free induction decay curve obtained by the Carr Purcell Meiboom Gill method with pulse NMR is approximated to three components of a low-mobility component $\alpha$, an intermediate component $\beta$ and a high-mobility component $\gamma$, a polyethylene powder slurry in which the relaxation time T and the component proportion R as the components satisfy the following mobility index is surprisingly suitable as a raw material of a fiber (e.g., high-strength fiber).

<Slurry Mobility Measurement Conditions>

Measurement apparatus: TD-NMR apparatus (model: minispec mq20) manufactured by Bruker

Temperature Increase Conditions:

temperature increase at 10°C/min and retention at 60°C for 23 minutes

temperature increase at 10°C/min and retention at 90°C for 23 minutes

temperature increase at 10°C/min and retention at 105°C for 23 minutes

temperature increase at 10°C/min and retention at 120°C for 23 minutes

temperature increase at 5°C/min and retention at 130°C for 26 minutes

temperature increase at 5°C/min and retention at 140°C for 26 minutes

temperature increase at 5°C/min and retention at 150°C for 10 minutes (thereafter, measurement of mobility)

The temperatures described above are values each obtained by measuring the internal temperature of a sample with a thermocouple. The set temperature of the apparatus is corrected with calibration straight lines (Formula A) and (Formula B) created in consideration of the deviation from the target temperature (actual temperature) of such a sample. The value after the decimal point is rounded.

$$\text{(in case of } 0°C \text{ or more and } 100°C \text{ or less)} \qquad y = 1.0984x + 260.88$$

(Formula A)

$$\text{(in case of more than } 100°C \text{ and } 200°C \text{ or less)} \qquad y = 1.1729x + 252.21$$

(Formula B)

x = Target temperature (°C), y = Set temperature (K)

Slurry Preparation Conditions:

30 parts by mass of the polyethylene powder, 70 parts by mass of liquid paraffin (liquid paraffin manufactured by MORESCO Corp. (product name: Smoil P-350P)), and 1 part by mass of an antioxidant (antioxidant (ADK STAB AO-60G) manufactured by ADEKA CORPORATION) are mixed per 100 parts by mass in total of the polyethylene powder and the liquid paraffin. An impregnation time of 20 hours is provided after preparation, and measurement is carried out.
Liquid paraffin used during slurry mobility measurement was liquid paraffin manufactured by MORESCO Corp. (product name: Smoil P-350P), and representative properties thereof were as follows: density at 15°C: 0.866 g /cm$^3$, pour point: -10°C, kinematic viscosity at 40°C: 68.00 mm$^2$/s (cSt), kinematic viscosity at 100°C: 9.188 mm$^2$/s (cSt), ring analysis Cn: 30%, Cp: 70%, average molecular weight :489 g /mol.

$$\text{(Mobility Index)} = T\alpha \times R\alpha/(R\alpha + R\beta) + T\beta \times R\beta/(R\alpha + R\beta) \text{ ... (Formula I)}$$

$T\alpha$: relaxation time (ms) of low-mobility component $\alpha$

Rα: abundance proportion of low-mobility component α

Tβ: relaxation time (ms) of intermediate component β

Rβ: abundance proportion of intermediate component β

A specific method for measuring the mobility index is as described in Examples mentioned later.

Liquid paraffin used during molding processing may be any liquid paraffin which serves as a plasticizer and which can form a homogeneous solution at a temperature equal to or more than a melting point of the ultrahigh-molecular-weight polyethylene powder when kneaded with the ultrahigh-molecular-weight polyethylene powder.

The antioxidant used during molding processing is not particularly limited and is preferably, for example, a phenol compound or a phenol-phosphorus compound, specifically include: phenol antioxidants such as 2,6-di-t-butyl-4-methylphenol(dibutylhydroxytoluene), n-octadecyl-3-(4-hydroxy-3,5-di-t-butylphenyl)propionate, and tetrakis(methylene(3,5-di-t-butyl-4-hydroxyhydrocinnamate))methane; phenol-phosphorus antioxidants such as 6-[3-(3-t-butyl-4-hydroxy-5-methylphenyl)propoxy]-2,4,8,10-tetra-t-butyldibenzo [d,f][1,3,2]dioxaphosphepin; and phosphorus antioxidants such as tetrakis(2,4-di-t-butylphenyl)-4,4'-biphenylene-di-phosphonite, tris(2,4-di-t-butylphenyl)phosphite and cyclic neopentanetetraylbis(2,4-t-butylphenylphosphite).

The low-mobility component α in the slurry of the polyethylene powder of the present embodiment is considered to be a component in which molecular chains hardly loosened in dissolution in the solvent are strongly entangled and shear stress is easily strongly applied as a physical crosslinking point in the course of molding processing.

The intermediate component β in the slurry of the polyethylene powder of the present embodiment corresponds to a portion in which molecular chains loosened in dissolution are weakly entangled, and is considered to be a component to be easily loosened in the course of molding processing. As each of the components is stronger in entanglement and lower in mobility, the relaxation time T is shorter.

The high-mobility component γ in the slurry of the polyethylene powder of the present embodiment is considered to correspond to an end portion of a polyethylene molecular chain not entangled with liquid paraffin.

The mobility index of the slurry is indicated by the proportion and the relaxation time of each of the components in dissolution of the polymer in liquid paraffin, and serves as an index for evaluation of the level of entanglement and the mobility of the entire molecular chain.

The ultrahigh-molecular-weight polyethylene powder of the present embodiment has a mobility index of 57 ms or more and 73 ms or less, preferably 60 or more and 69 or less, and more preferably 64 ms or more and 68 ms or less in slurry mobility measurement conditions.

A mobility index at 150°C of 57 ms or more allows a component in which molecular chains are strongly entangled to be moderately present, and reduces the stress during molding processing, thereby less reducing the molecular weight. In addition, molecular chains are smoothly disentangled, and therefore a fiber hardly causing thread breakage even by drawing at a high speed tends to be able to be obtained.

On the other hand, a mobility index at 150°C of 73 ms or less allows a component in which molecular chains are weakly entangled to be moderately present, and imparts sufficient entangling sites, to uniformly propagate the stress during drawing, thereby easily providing a high-strength thread.

In general, when the level of entanglement of molecular chains is high, the mobility of molecular chains is low to increase the shear stress during kneading, the molecular weight is reduced, and molecular chains do not smoothly move during drawing and molding processability deteriorates to cause unevenness.

On the other hand, when the level of entanglement of a polymer is low, the mobility of molecular chains is high to impart enriched drawability and an increased degree of orientation and thus obtain a high-strength thread, but sufficient entangling sites are not present and it is thus considered that stress is not uniformly propagated and unevenness is caused. This unevenness causes a portion where mechanical strength is low, and the portion serves as the point of origin of breaking.

The polyethylene powder of the present embodiment is well controlled about the intensity of the level of entanglement and therefore can allow both of mechanical strength and molding processability of a fiber to be improved.

In order to control the mobility index at 150°C of the slurry of the ultrahigh-molecular-weight polyethylene powder of the present embodiment to the range mentioned above, entanglement of the polyethylene powder is moderately decreased. The method for decreasing the entanglement is not particularly limited, and suppression of entanglement formation at the initial stage of polymerization or generation of a non-branched linear polymer is considered.

As the method for decreasing entanglement of the polyethylene powder, suppression of entanglement formation at the initial stage of polymerization is considered. Such formation at the initial stage of polymerization occurs mainly due to a close distance between active sites and thus entanglement of polymer chains grown from the vicinity. Therefore, it is considered that the entanglement by polymerization can be decreased by reducing the active site density on a catalyst surface and increasing the distance between active sites.

Examples include a method involving reducing the active site density of a catalyst, a method involving adopting a promoter bulky as compared with the distance between adjacent catalytic active sites, as a promoter for use in polymerization, a method involving simultaneously adding titanium tetrachloride and specific organic magnesium during supporting of an active site on a carrier, and a method involving adopting a mixture of two or more promoters as a promoter for use in polymerization.

Specific examples of the method involving reducing the active site density of a catalyst include a method involving decreasing the amount of titanium supported on the catalyst by adjustment of the molar ratio of raw materials during synthesis. The molar ratio (Ti/Mg) of titanium to magnesium atom in a carrier is preferably 1/4 or less, more preferably 1/8 or less, more preferably 1/16 or less, and further preferably 1/32 or less. Further examples also include a method involving supporting titanium on a carrier and then performing surface treatment with organic aluminum to thereby liberate an excess titanium compound.

It is known that titanium tetrachloride has a structure like an aggregate on a carrier, and polymer chains are grown from an active site aggregated, with being entangled. The active site density on a catalyst surface can be reduced to decrease the number of active sites each having an aggregation structure and decrease entanglement at the initial stage of polymerization.

The promoter for use in polymerization can also be a promoter bulky as compared with the distance between adjacent catalytic active sites. The steric hindrance of such a bulky promoter does not lead to activation of an active site located at a distance close as compared with the size of the promoter and leads to an apparently extended distance between active sites involving in polymerization. Therefore, polymer chains grown in polymerization are hardly entangled and a polyethylene powder with small entanglement is obtained.

The present inventor has pursued diligent studies and consequently found that a polyethylene powder with small entanglement is obtained also by vigorous reaction using organic magnesium during supporting of an active site on a carrier. Although the reason why a polyethylene powder with small entanglement is obtained by the above method is not clear, it is considered that the distance between active sites is extended because, when organic magnesium high in reactivity with titanium tetrachloride is simultaneously added, vigorous reaction occurs to generate a catalyst fine particle not on a carrier surface, but in a solvent, and such each catalyst fine particle is supported on a carrier with being independent.

For example, the organic magnesium may be a mixture of dialkyl magnesium and trialkyl aluminum, and the proportion of the dialkyl magnesium is preferably higher than that of the trialkyl aluminum.

The degree of entanglement in the slurry of the ultrahigh-molecular-weight polyethylene powder of the present embodiment, as obtained by the following (formula II), is 0.6 or more and 2.8 or less, preferably 1.0 or more and 2.7 or less, and more preferably 1.2 or more and 2.6 or less in the slurry mobility measurement conditions.

$$\text{(Degree of entanglement)} = R\beta/R\alpha \text{ ... (Formula II)}$$

$R\alpha$ and $R\beta$ in the (Formula II) respectively represent the abundance proportion of the low-mobility component $\alpha$ and the abundance proportion of the intermediate component $\beta$, as described above.

$R\alpha$ is preferably 9 or more and 24 or less, and more preferably 10 or more and 23 or less.

$R\beta$ is preferably 12 or more and 27 or less, and more preferably 13 or more and 26 or less.

$R\alpha$ and $R\beta$ which are in the ranges mentioned above tend to impart entangling sites well-balanced and impart excellent drawability processability and strength.

The degree of entanglement is indicated with the abundance proportion of the low-mobility component $\alpha$ and the abundance proportion of the intermediate component $\beta$ in liquid paraffin, and represents the number of entangling sites serving as physically crosslinking sites binding molecular chains.

When the degree of entanglement in the slurry of the ultrahigh-molecular-weight polyethylene powder is 0.6 or more, the number of entangling sites does not so increase and sufficient crystal lamellae are obtained at a lowered polymer concentration even by no kneading, thereby resulting in tendencies to more improve drawability during gel spinning processing and more hardly cause thread breakage.

When the degree of entanglement in the slurry is 2.8 or less, entangling sites responsible for propagation of drawing stress are sufficiently present, thereby resulting in tendencies to more uniformly propagate stress, promote orientation of molecular chains, allow for drawing at a higher ratio, and enable a higher-strength thread to be produced.

As the method for controlling the degree of entanglement at 150°C in the slurry of the ultrahigh-molecular-weight polyethylene powder of the present embodiment to the range mentioned above, generation of a non-branched linear polymer is considered. Such no branching allows molecular chains to easily slide, enables the entanglement occurring in polymerization to be loosened in the course of dissolution, and allows a polyethylene powder low in degree of entanglement in liquid paraffin to be obtained.

Specific examples include a method with the promoter for use in polymerization as a mixture of two or more kinds thereof. It is generally known as chain transfer reaction to generate a macromonomer having a terminal double bond by beta-hydrogen detachment. The macromonomer is incorporated in molecular chains in polymerization, thus is long-chain branched, and therefore inhibits such molecular chains from being disentangled, to make entanglement stronger. When the promoter can be adopted as a mixture of two or more thereof to promote chain transfer of the promoter and suppress branching, a polyethylene powder in which entanglement is decreased is obtained in the course of dissolution.

In general, as the molecular weight of an ultrahigh-molecular-weight polyethylene powder is higher, entanglement is also stronger. While this relationship is remarkably observed in a molecular weight region in which the intrinsic viscosity is less than 12.0 dL/g and the reduction of mobility begins to reach the upper limit at intrinsic viscosity of 12.0 dL/g or more, a relation can be formed between the intrinsic viscosity and the mobility index.

The ultrahigh-molecular-weight polyethylene powder of the present embodiment preferably satisfies the following (formula III), more preferably satisfies the following (formula III-A), and further preferably satisfies the following (formula III-B).

$$[\text{Mobility Index}] > -0.2 \times [\text{Intrinsic Viscosity IV}] + 62 \quad (\text{Formula III})$$

$$[\text{Mobility Index}] > -0.2 \times [\text{Intrinsic Viscosity IV}] + 65 \quad (\text{Formula III-A})$$

$$[\text{Mobility Index}] > -0.2 \times [\text{Intrinsic Viscosity IV}] + 69 \quad (\text{Formula III-B})$$

[Titanium Content and Aluminum Content in Ultrahigh-molecular-weight Polyethylene Powder]

The content of titanium (Ti) in the ultrahigh-molecular-weight polyethylene powder of the present embodiment is preferably 10 ppm or less, more preferably 0 ppm or more and 8 ppm or less, and further preferably 0 ppm or more and 5 ppm or less. The content of aluminum (Al) in the ultrahigh-molecular-weight polyethylene powder of the present embodiment is preferably 10 ppm or less, more preferably 0 ppm or more and 8 ppm or less, and further preferably 0 ppm or more and 5 ppm or less.

The contents of titanium and aluminum in the ultrahigh-molecular-weight polyethylene powder of the present embodiment can be adjusted in such ranges to decrease the amount of a metal eluted in a liquid. For example, contamination of a filtrate in filter use tends to be suppressed to improve the safety of a medical fiber for use in the living body.

It is generally known that large amounts of metals derived from catalyst residues remaining in an ultrahigh-molecular-weight polyethylene powder cause degradation of polyethylene. The contents of Ti and Al in the ultrahigh-molecular-weight polyethylene powder can be controlled by the productivity of an ethylene homopolymer or an ethylene polymer per unit catalyst. The productivity of an ethylene homopolymer or an ethylene polymer can be controlled by a polymerization temperature, a polymerization pressure, or a slurry concentration in a reactor for production. Specifically, examples of the approach of enhancing the productivity of the ethylene homopolymer or the ethylene polymer used in the present embodiment include, but are not particularly limited to, elevation of a polymerization temperature, elevation of a polymerization pressure, and/or elevation of a slurry concentration in polymerization. In other methods, the amount of aluminum can be controlled by changing the composition of a catalyst, selecting the type of a promoter component, decreasing the concentration of the promoter component, or washing the ethylene homopolymer or the ethylene polymer with an acid or an alkali in generation of the ethylene homopolymer or the ethylene polymer. In the present embodiment, the contents of Ti and Al can be measured by a method described in Examples mentioned later.

[Average Particle Size D50]

The average particle size D50 of the polyethylene powder of the present embodiment, as measured with a laser particle size distribution meter, is preferably 40 μm or more and 400 μm or less, more preferably 50 μm or more and 350 μm or less, and further preferably 60 μm or more and 300 μm or less.

When the polyethylene powder of the present embodiment has an average particle size D50 of 40 μm or more, handleability tends to be much more excellent and the trouble in a molding step tends to be reduced. When the average particle size D50 is 400 μm or less, a gel is obtained which is much more favorable in fusibility in a solvent (e.g., liquid paraffin), which exhibits a more uniform molecular chain distribution and which is highly oriented, and therefore a high-strength fiber excellent in mechanical strength tends to be able to be produced.

A method for controlling the average particle size D50 to the aforementioned range is not especially limited, and for example, a method in which conditions in a polymerization system (e.g., a polymerization temperature, and an ethylene pressure) are appropriately adjusted can be employed. Specifically, the polymerization temperature and/or polymerization pressure can be increased.

In the present embodiment, D50 can be determined by a method described in Examples mentioned later.

[Catalyst)

Examples of the catalyst for use in the production of the polyethylene powder according to the present embodiment include, but are not particularly limited to, general Ziegler-Natta catalysts. The Ziegler-Natta catalyst is preferably a catalyst for olefin polymerization comprising a solid catalyst [A] and an organic metal compound component [B], wherein the solid catalyst [A] is produced by reacting an organic magnesium compound represented by the following formula 1 (hereinafter, also referred to as "(A-1)".) which is soluble in an inert hydrocarbon solvent with a titanium compound represented by the following formula 2 (hereinafter, also referred to as "(A-2)".):

$$(A\text{-}1): (M^1)_\alpha(Mg)_\beta(R^2)_a(R^3)_b(Y^1)_c \ldots \qquad \text{Formula 1}$$

wherein $M^1$ represents a metal atom selected from the group consisting of groups 12, 13, and 14 of the periodic system; $R^2$ and $R^3$ each represent a hydrocarbon group having 2 or more and 20 or less carbon atoms; $Y^1$ represents any of an alkoxy group, a siloxy group, an allyloxy group, an amino group, an amide group, $-N=C-R^4$, $R^5$, $-SR^6$ (wherein $R^4$, $R^5$ and $R^6$ each represent a hydrocarbon group having 1 or more and 20 or less carbon atoms, and when c is 2, $Y^1$ moieties may be different from each other.), and a β-keto acid residue; and α, β, a, b and c each represent a real number that satisfies the following relationships: $0 \le \alpha$, $0 < \beta$, $0 \le a$, $0 \le b$, $0 \le c$, $0 < a + b$, $0 \le c/(\alpha + \beta) \le 2$, and $n\alpha + 2\beta = a + b + c$ (wherein n represents the valence of $M^1$.); and

$$(A\text{-}2): Ti(OR^7)_d X^1_{(4-d)} \ldots \qquad \text{Formula 2}$$

wherein d represents a real number of 0 or larger and 4 or smaller; $R^7$ represents a hydrocarbon group having 1 or more and 20 or less carbon atoms; and $X^1$ represents a halogen atom.

Specific examples of the inert hydrocarbon solvent for use in the reaction between the compounds (A-1) and (A-2) include, but are not particularly limited to: aliphatic hydrocarbons such as pentane, hexane, and heptane; aromatic hydrocarbons such as benzene and toluene; and alicyclic hydrocarbons such as cyclohexane and methylcyclohexane.

First, the compound (A-1) will be described. The compound (A-1) is represented in the form of an organic magnesium complex compound soluble in an inert hydrocarbon solvent, and encompasses all of dihydrocarbyl magnesium compounds and their complexes with other metal compounds. The relational expression $n\alpha + 2\beta = a + b + c$ of the symbols α, β, a, b, and c represents the stoichiometry of metal atom valence and substituents.

In the formula 1, specific examples of the hydrocarbon group having 2 or more and 20 or less carbon atoms, represented by $R^2$ or $R^3$, include, but are not particularly limited to, alkyl groups, cycloalkyl groups, and aryl groups, for example, an ethyl group, a propyl group, a butyl group, a pentyl group, a hexyl group, an octyl group, a decyl group, a cyclohexyl group, and a phenyl group. Among them, alkyl groups are preferred. When $\alpha > 0$, a metal atom selected from the group consisting of groups 12, 13, and 14 of the periodic system can be used as the metal atom $M^1$. Examples thereof include zinc, boron, and aluminum. Among them, aluminum and zinc are preferred.

The ratio $\beta / \alpha$ of magnesium to the metal atom $M^1$ is not particularly limited and is preferably 0.1 or more and 30 or less, more preferably 0.5 or more and 10 or less. In the case of using a predetermined organic magnesium compound wherein $\alpha = 0$, for example, a compound wherein $R^2$ is 1-methylpropyl is soluble in an inert hydrocarbon solvent. Such a compound also brings about a preferred consequence to the present embodiment. It is recommended that $R^2$ and $R^3$ satisfy any one of the following three conditions (1), (2), and (3) in the formula 1 wherein $\alpha = 0$.

Condition (1): at least one of $R^2$ and $R^3$ is a secondary or tertiary alkyl group having 4 or more and 6 or less carbon atoms, preferably both of $R^2$ and $R^3$ are alkyl groups having 4 or more and 6 or less carbon atoms and at least one of the groups is a secondary or tertiary alkyl group;

Condition (2): $R^2$ and $R^3$ are alkyl groups differing in the number of carbon atoms, preferably $R^2$ is an alkyl group having 2 or 3 carbon atoms and $R^3$ is an alkyl group having 4 or more carbon atoms; and

Condition (3): at least one of $R^2$ and $R^3$ is a hydrocarbon group having 6 or more carbon atoms, preferably, an alkyl group wherein the total number of carbon atoms contained in $R^2$ and $R^3$ is 12 or more.

Hereinafter, these groups will be shown specifically. In Condition (1), specific examples of the secondary or tertiary alkyl group having 4 or more and 6 or less carbon atoms include a 1-methylpropyl group, a 2-methylpropyl group, a 1,1-dimethylethyl group, a 2-methylbutyl group, a 2-ethylpropyl group, a 2,2-dimethylpropyl group, a 2-methylpentyl group, a 2-ethylbutyl group, a 2,2-dimethylbutyl group, and a 2-methyl-2-ethylpropyl group. Among them, a 1-methylpropyl group is particularly preferred.

In Condition (2), specific examples of the alkyl group having 2 or 3 carbon atoms include ethyl, 1-methylethyl, and propyl groups. Among them, an ethyl group is particularly preferred. Specific examples of the alkyl group having 4 or more carbon atoms include, but are not particularly limited to, a butyl group, a pentyl group, a hexyl group, a heptyl group, and an octyl group. Among them, a butyl group and a hexyl group are particularly preferred.

Alternatively, in Condition (3), specific examples of the hydrocarbon group having 6 or more carbon atoms include, but are not particularly limited to, a hexyl group, a heptyl group, an octyl group, nonyl group, a decyl group, a phenyl group, and a 2-naphthyl group. Among these hydrocarbon groups, alkyl groups are preferred. Among the alkyl groups, a hexyl group and an octyl group are particularly preferred.

According to general tendencies, an alkyl group containing a larger number of carbon atoms is more soluble in an inert hydrocarbon solvent, but forms a solution having a higher viscosity. A moderate long chain alkyl group is therefore preferably used in terms of handling. The organic magnesium compound can be diluted, for use, with an inert hydrocarbon solvent. This solution can be used without any problem even if trace amounts of Lewis basic compounds such as ethers, esters, and amines are contained or remain therein.

Next, $Y^1$ will be described. In the formula 1, $Y^1$ represents any of an alkoxy group, a siloxy group, an allyloxy group, an amino group, an amide group, $-N=C-R^4,R^5$, $-SR^6$ (wherein $R^4$, $R^5$ and $R^6$ each independently represent a hydrocarbon group having 2 or more and 20 or less carbon atoms.), and a $\beta$-keto acid residue.

In the formula 1, the hydrocarbon group represented by $R^4$, $R^5$, or $R^6$ is preferably an alkyl or aryl group having 1 or more and 12 or less carbon atoms, particularly preferably an alkyl or aryl group having 3 or more and 10 or less carbon atoms. Examples include, but are not particularly limited to, a methyl group, an ethyl group, a propyl group, a 1-methylethyl group, a butyl group, a 1-methylpropyl group, a 1,1-dimethylethyl group, a pentyl group, a hexyl group, a 2-methylpentyl group, a 2-ethylbutyl group, a 2-ethylpentyl group, a 2-ethylhexyl group, a 2-ethyl-4-methylpentyl group, a 2-propylheptyl group, a 2-ethyl-5-methyloctyl group, an octyl group, a nonyl group, a decyl group, a phenyl group, and a naphthyl group. Among them, a butyl group, a 1-methylpropyl group, a 2-methylpentyl group and a 2-ethylhexyl group are particularly preferred.

In the formula 1, $Y^1$ is preferably an alkoxy group or a siloxy group. Specific examples of the alkoxy group preferably include, but are not particularly limited to, a methoxy group, an ethoxy group, a propoxy group, a 1-methylethoxy group, a butoxy group, a 1-methylpropoxy group, a 1,1-dimethylethoxy group, a pentoxy group, a hexoxy group, a 2-methylpentoxy group, a 2-ethylbutoxy group, a 2-ethylpentoxy group, a 2-ethylhexoxy group, a 2-ethyl-4-methylpentoxy group, a 2-propylheptoxy group, a 2-ethyl-5-methyloctoxy group, an octoxy group, a phenoxy group, and a naphthoxy group. Among them, a butoxy group, a 1-methylpropoxy group, a 2-methylpentoxy group and a 2-ethylhexoxy group are more preferred. Specific examples of the siloxy group preferably include, but are not particularly limited to, a hydrodimethylsiloxy group, an ethylhydromethylsiloxy group, a diethylhydrosiloxy group, a trimethylsiloxy group, an ethyldimethylsiloxy group, a diethylmethylsiloxy group, and a triethylsiloxy group. Among them, a hydrodimethylsiloxy group, an ethylhydromethylsiloxy group, a diethylhydrosiloxy group, and a trimethylsiloxy group are more preferred.

In the present embodiment, the compound (A-1) can be synthesized by any method without particular limitations and may be synthesized by reacting, for example, an organic magnesium compound selected from the group consisting of the formulas $R^2MgX^1$ and $R^2Mg$ (wherein $R^2$ is as defined above, and $X^1$ represents a halogen atom) with an organic metal compound selected from the group consisting of the formulas $M^1R^3_n$ and $M^1R^3_{(n-1)}H$ (wherein $M^1$ and $R^3$ are as defined above, and n represents the valence of $M^1$) at 25°C or higher and 150°C or lower in an inert hydrocarbon solvent and, if necessary, subsequently with a compound represented by the formula Y'-H (wherein $Y^1$ is as defined above) or with an organic magnesium compound and/or an organic aluminum compound having a functional group represented by $Y^1$. In the approach of reacting the organic magnesium compound soluble in an inert hydrocarbon solvent with a compound represented by the formula $Y^1$-H, the order in which the compounds are added to the reaction system is not particularly limited. Any of the following methods can be used: for example, the compound represented by the formula $Y^1$-H is added into the organic magnesium compound; the organic magnesium compound is added into the compound represented by the formula Y'-H; and both of the compounds are added at the same time.

In the present embodiment, the molar composition ratio $c / (\alpha + \beta)$ of $Y^1$ to all metal atoms in the compound (A-1) is $0 \leq c / (\alpha + \beta) \leq 2$, preferably $0 \leq c / (\alpha + \beta) < 1$. The compound (A-1) wherein the molar composition ratio of $Y^1$ to all metal atoms is 2 or less tends to have better reactivity with the compound (A-2).

Next, the compound (A-2) will be described. The compound (A-2) is a titanium compound represented by the formula 2:

$$(A\text{-}2): Ti(OR^7)_d X^1_{(4-d)} \cdots \qquad \text{Formula 2}$$

wherein d represents a real number of 0 or larger and 4 or smaller; $R^7$ represents a hydrocarbon group having 1 or more and 20 or less carbon atoms; and $X^1$ represents a halogen atom.

In the formula 2, d is preferably 0 or larger and 1 or smaller, further preferably 0. In the formula 2, specific examples of the hydrocarbon group represented by $R^7$ include, but are not particularly limited to: aliphatic hydrocarbon groups such as a methyl group, an ethyl group, a propyl group, a butyl group, a pentyl group, a hexyl group, a 2-ethylhexyl group, a heptyl group, an octyl group, a decyl group, and an aryl group; alicyclic hydrocarbon groups such as a cyclohexyl group, a 2-methylcyclohexyl group, and a cyclopentyl group; and aromatic hydrocarbon groups such as a phenyl group and a naphthyl group. Among them, aliphatic hydrocarbon groups are preferred. Examples of the halogen atom represented by $X^1$ include chlorine, bromine, and iodine. Among them, chlorine is preferred. In the present embodiment, the compound (A-2) is particularly preferably titanium tetrachloride. In the present embodiment, two or more compounds selected from these compounds may be used as a mixture.

Next, the reaction between the compounds (A-1) and (A-2) will be described. The reaction is preferably carried out in an inert hydrocarbon solvent and further preferably carried out in an aliphatic hydrocarbon solvent such as hexane or heptane. In the reaction, the molar ratio between (A-1) and (A-2) is not particularly limited, and the molar ratio (Ti / Mg) of Ti atom contained in the compound (A-2) to Mg atom contained in the compound (A-1) is preferably 0.1 or more and 10 or less, more preferably 0.3 or more and 3 or less. The reaction temperature is not particularly limited and is preferably within the range of -80°C or higher and 150°C or lower, further preferably within the range of -40°C or higher and 100°C or lower. The order in which the compounds (A-1) and (A-2) are added to the reaction system is not particularly limited. Any of the following methods can be used: the compound (A-2) is added subsequently to the compound (A-1); the compound (A-1) is added subsequently to the compound (A-2); and the compounds (A-1) and (A-2) are added at the same time. The method of adding the compounds (A-1) and (A-2) at the same time is preferred. In the present embodiment, the solid catalyst [A] obtained by the reaction is used as a slurry solution with an inert hydrocarbon solvent.

Another example of the Ziegler-Natta catalyst used in the present embodiment is preferably a catalyst for olefin polymerization comprising a solid catalyst [C] and an organic metal compound component [B], wherein the solid catalyst [C] is produced by reacting an organic magnesium compound represented by the formula 3 (hereinafter, also referred to as "(C-1)".) which is soluble in an inert hydrocarbon solvent with a chlorinating agent represented by the formula 4 (hereinafter, also referred to as "(C-2)".), and allowing an organic magnesium compound represented by the formula 5 (hereinafter, also referred to as "(C-4)".) which is soluble in an inert hydrocarbon solvent and a titanium compound represented by the formula 6 (hereinafter, also referred to as "(C-5)".) to be supported by a carrier (hereinafter, also referred to as "(C-3)".) thus prepared.

$$\text{(C-1): } (M^2)_\gamma (Mg)_\delta (R^8)_e (R^9)_f (OR^{10})_g \cdots \qquad \text{Formula 3}$$

wherein $M^2$ represents a metal atom selected from the group consisting of groups 12, 13, and 14 of the periodic system; $R^8$, $R^9$, and $R^{10}$ each represent a hydrocarbon group having 2 or more and 20 or less carbon atoms; and $\gamma$, $\delta$, e, f, and g each represent a real number that satisfies the following relationships: $0 \le \gamma$, $0 < \delta$, $0 \le e$, $0 \le f$, $0 \le g$, $0 < e + f$, $0 \le g / (\gamma + \delta) \le 2$, and $k\gamma + 2\delta = e + f + g$ (wherein k represents the valence of $M^2$);

$$\text{(C-2): } H_h SiCl_i R^{11}_{(4-(h+i))} \cdots \qquad \text{Formula 4}$$

wherein $R^{11}$ represents a hydrocarbon group having 1 or more and 12 or less carbon atoms; and h and i each represent a real number that satisfies the following relationships: $0 < h$, $0 < i$, and $0 < h + i \le 4$;

$$\text{(C-4): } (M^1)_\alpha (Mg)_\beta (R^2)_a (R^3)_b Y^1_c \cdots \qquad \text{Formula 5}$$

wherein $M^1$ represents a metal atom selected from the group consisting of groups 12, 13, and 14 of the periodic system; $R^2$ and $R^3$ each represent a hydrocarbon group having 2 or more and 20 or less carbon atoms; $Y^1$ represents any of alkoxy, siloxy, allyloxy, amino, amide, $-N=C-R^4$, $R^5$, $-SR^6$ (wherein $R^4$, $R^5$, and $R^6$ each represent a hydrocarbon group having 1 or more and 20 or less carbon atoms, and when c is 2, $Y^1$ moieties may be different from each other), and a $\beta$-keto acid residue; and $\alpha$, $\beta$, a, b, and c each represent a real number that satisfies the following relationships: $0 \le \alpha$, $0 < \beta$, $0 \le a$, $0 \le b$, $0 \le c$, $0 < a + b$, $0 \le c / (\alpha + \beta) \le 2$, and $n\alpha + 2\beta = a + b + c$ (wherein n represents the valence of $M^1$); and

$$\text{(C-5): } Ti(OR^7)_d X^1_{(4-d)} \cdots \qquad \text{Formula 6}$$

wherein d represents a real number of 0 or larger and 4 or smaller; $R^7$ represents a hydrocarbon group having 1 or more and 20 or less carbon atoms; and $X^1$ represents a halogen atom.

First, the compound (C-1) will be described. The compound (C-1) is represented in the form of an organic magnesium complex compound soluble in an inert hydrocarbon solvent, but encompasses all of dihydrocarbyl magnesium compounds and their complexes with other metal compounds. In the formula 3, the relational expression $k\gamma + 2\delta = e + f + g$ of the symbols $\gamma$, $\delta$, e, f, and g represents the stoichiometry of metal atom valence and substituents.

In the formula, specific examples of the hydrocarbon group represented by $R^8$ or $R^9$ include, but are not particularly limited to, alkyl groups, cycloalkyl groups, and aryl groups, for example, a methyl group, an ethyl group, a propyl group, a butyl group, a pentyl group, a hexyl group, an octyl group, a decyl group, a cyclohexyl group, and a phenyl group. Among them, alkyl groups are preferred for each of $R^8$ and $R^9$. When $\gamma > 0$, a metal atom selected from the group consisting of groups 12, 13, and 14 of the periodic system can be used as the metal atom $M^2$. Examples thereof include zinc, boron, and aluminum. Among them, aluminum and zinc are particularly preferred.

The ratio $\delta / \gamma$ of magnesium to the metal atom $M^2$ is not particularly limited and is preferably 0.1 or more and 30 or less, further preferably 0.5 or more and 10 or less. In the case of using a predetermined organic magnesium compound wherein $\gamma = 0$, for example, a compound wherein $R^8$ is 1-methylpropyl is soluble in an inert hydrocarbon solvent. Such a compound also brings about a preferred consequence to the present embodiment. It is recommended that $R^8$ and $R^9$ satisfy any one of the following three conditions (1), (2), and (3) in the formula 3 wherein $\gamma = 0$.

Condition (1): at least one of $R^8$ and $R^9$ is a secondary or tertiary alkyl group having 4 or more and 6 or less carbon atoms, preferably, both of $R^8$ and $R^9$ are alkyl groups having 4 or more and 6 or less carbon atoms and at least one of the groups is a secondary or tertiary alkyl group;

Condition (2): $R^8$ and $R^9$ are alkyl groups differing in the number of carbon atoms, preferably, $R^8$ is an alkyl group having 2 or 3 carbon atoms and $R^9$ is an alkyl group having 4 or more carbon atoms; and

Condition (3): at least one of $R^8$ and $R^9$ is a hydrocarbon group having 6 or more carbon atoms, preferably, an alkyl group wherein the total number of carbon atoms contained in $R^8$ and $R^9$ is 12 or more.

Hereinafter, these groups will be shown specifically. In Condition (1), specific examples of the secondary or tertiary alkyl group having 4 or more and 6 or less carbon atoms include a 1-methylpropyl group, a 2-methylpropyl group, a 1,1-dimethylethyl group, a 2-methylbutyl group, a 2-ethylpropyl group, a 2,2-dimethylpropyl group, a 2-methylpentyl group, a 2-ethylbutyl group, a 2,2-dimethylbutyl group, and a 2-methyl-2-ethylpropyl group. Among them, a 1-methylpropyl group is particularly preferred.

In Condition (2), examples of the alkyl group having 2 or 3 carbon atoms include ethyl, 1-methylethyl, and propyl groups. Among them, an ethyl group is particularly preferred. Specific examples of the alkyl group having 4 or more carbon atoms, but are not particularly limited to, a butyl group, a pentyl group, a hexyl group, a heptyl group, and an octyl group. Among them, butyl and hexyl groups are particularly preferred.

Alternatively, in Condition (3), specific examples of the hydrocarbon group having 6 or more carbon atoms include, but are not particularly limited to, a hexyl group, a heptyl group, an octyl group, a nonyl group, a decyl group, a phenyl group, and a 2-naphthyl group. Among these hydrocarbon groups, alkyl groups are preferred. Among the alkyl groups, a hexyl group and an octyl group are particularly preferred.

According to general tendencies, an alkyl group containing a larger number of carbon atoms is more soluble in an inert hydrocarbon solvent and forms a solution having a higher viscosity. A moderately long-chain alkyl group is therefore preferably used in terms of handling. The organic magnesium compound is used as an inert hydrocarbon solution. This solution can be used without any problem even if trace amounts of Lewis basic compounds such as ethers, esters, and amines are contained or remain therein.

Next, the alkoxy group ($OR^{10}$) will be described. The hydrocarbon group represented by $R^{10}$ is preferably an alkyl or aryl group having 1 or more and 12 or less carbon atoms, particularly preferably an alkyl or aryl group having 3 or more and 10 or less carbon atoms. Specific examples of $R^{10}$ include, but are not particularly limited to, a methyl group, an ethyl group, a propyl group, a 1-methylethyl group, a butyl group, a 1-methylpropyl group, a 1,1-dimethylethyl group, a pentyl group, a hexyl group, a 2-methylpentyl group, a 2-ethylbutyl group, a 2-ethylpentyl group, a 2-ethylhexyl group, a 2-ethyl-4-methylpentyl group, a 2-propylheptyl group, a 2-ethyl-5-methyloctyl group, an octyl group, nonyl group, a decyl group, a phenyl group, and a naphthyl group. Among them, a butyl group, a 1-methylpropyl group, a 2-methylpentyl group and a 2-ethylhexyl group are particularly preferred.

In the present embodiment, the compound (C-1) can be synthesized by any method without particular limitations and is preferably synthesized by a method of reacting an organic magnesium compound selected from the group consisting of the formulas $R^8MgX^1$ and $R^8Mg$ (wherein $R^8$ is as defined above, and $X^1$ represents a halogen atom) with an organic metal compound selected from the group consisting of the formulas $M^2R^9{}_k$ and $M^2R^9{}_{(k-1)}H$ (wherein $M^2$, $R^9$, and k are as defined above) at a temperature of 25°C or higher and 150°C or lower in an inert hydrocarbon solvent and, if necessary, subsequently with an alcohol having a hydrocarbon group represented by $R^9$ (wherein $R^9$ is as defined above) or an alkoxy magnesium compound and/or an alkoxy aluminum compound having a hydrocarbon group represented by $R^9$ which is soluble in an inert hydrocarbon solvent.

In the approach of reacting the organic magnesium compound soluble in an inert hydrocarbon solvent with an alcohol, the order in which the compounds are added to the reaction system is not particularly limited. Any of the following methods can be used: the alcohol is added into the organic magnesium compound; the organic magnesium compound is added into the alcohol; and both of the compounds are added at the same time. In the present embodiment, the ratio between the organic magnesium compound soluble in an inert hydrocarbon solvent and the alcohol in the reaction is not particularly limited, and the molar composition ratio g / ($\gamma$ + $\delta$) of the alkoxy group to all metal atoms in the resulting alkoxy group-containing organic magnesium compound is $0 \leq$ g / ($\gamma$ + $\delta$) $\leq$ 2, preferably $0 \leq$ g / ($\gamma$ + $\delta$) < 1.

Next, the compound (C-2) will be described. The compound (C-2) is a silicon chloride compound having at least one Si-H bond, represented by the formula 4:

$$(C\text{-}2)\text{: } H_h SiCl_i R^{11}{}_{(4-(h+i))} \cdots \qquad \text{Formula 4}$$

wherein $R^{11}$ represents a hydrocarbon group having 1 or more and 12 or less carbon atoms; and h and i each represent a real number that satisfies the following relationships: $0 < h$, $0 < i$, and $0 < h + i \leq 4$.

In the formula 4, specific examples of the hydrocarbon group represented by $R^{11}$ include, but are not particularly limited to, aliphatic hydrocarbon groups, alicyclic hydrocarbon groups, and aromatic hydrocarbon groups, for example, a methyl group, an ethyl group, a propyl group, a 1-methylethyl group, a butyl group, a pentyl group, a hexyl group, an octyl group, a decyl group, a cyclohexyl group, and a phenyl group. Among them, alkyl groups having 1 or more and 10 or less carbon atoms are preferred, and alkyl groups having 1 or more and 3 or less carbon atoms, such as a methyl group, an ethyl group, a propyl group, and a 1-methylethyl group are further preferred. Each of h and i is a number larger than 0 that satisfies the relationship $h + i \leq 4$. Preferably, i is 2 or larger and 3 or smaller.

Specific examples of such a compound include, but are not particularly limited to, $HSiCl_3$, $HSiCl_2 CH_3$, $HSiCl_2 C_2 H_5$, $HSiCl_2(C_3 H_7)$, $HSiCl_2(2\text{-}C_3 H_7)$, $HSiCl_2(C_4 H_9)$, $HSiCl_2(C_6 H_5)$, $HSiCl_2(4\text{-}Cl\text{-}C_6 H_4)$, $HSiCl_2(CH=CH_2)$, $HSiCl_2(CH_2 C_6 H_5)$, $HSiCl_2(1\text{-}C_{10} H_7)$, $HSiCl_2(CH_2 CH=CH_2)$, $H_2 SiCl(CH_3)$, $H_2 SiCl(C_2 H_5)$, $HSiCl(CH_3)_2$, $HSiCl(C_2 H_5)_2$, $HSiCl(CH_3)(2\text{-}C_3 H_7)$, $HSiCl(CH_3)(C_6 H_5)$, and $HSiCl(C_6 H_5)_2$. These silicon chloride compounds are used each alone or as a mixture of two or more types selected from these compounds. Among them, $HSiCl_3$, $HSiCl_2 CH_3$, $HSiCl(CH_3)_2$, and $HSiCl_2(C_3 H_7)$ are preferred, and $HSiCl_3$ and $HSiCl_2 CH_3$ are more preferred.

Next, the reaction between the compounds (C-1) and (C-2) will be described. For the reaction, the compound (C-2) is preferably used after being diluted in advance with an inert hydrocarbon solvent, a chlorinated hydrocarbon (e.g., 1,2-dichloroethane, o-dichlorobenzene, or dichloromethane), an ether vehicle (e.g., diethyl ether or tetrahydrofuran), or a mixed vehicle thereof. Among them, an inert hydrocarbon solvent is more preferred in terms of the performance of the catalyst. The ratio between (C-1) and (C-2) in the reaction is not particularly limited and is preferably 0.01 mol or higher and 100 mol or lower, further preferably 0.1 mol or higher and 10 mol or lower, of silicon atom contained in the compound (C-2) per 1 mol of magnesium atom contained in the compound (C-1).

The method for reacting the compounds (C-1) and (C-2) is not particularly limited. Any of the following methods can be used: the compounds (C-1) and (C-2) are reacted while introduced at the same time to a reactor (simultaneous addition method); a reactor is charged with the compound (C-2) in advance, and then, the compound (C-1) is introduced to the reactor; and a reactor is charged with the compound (C-1) in advance, and then, the compound (C-2) is introduced to the reactor. Among them, the method of charging a reactor with the compound (C-2) in advance and then introducing the compound (C-1) to the reactor is preferred. The carrier (C-3) obtained by the reaction is preferably separated by filtration or decantation and then thoroughly washed with an inert hydrocarbon solvent to remove unreacted materials or by-products, etc.

The temperature of the reaction between the compounds (C-1) and (C-2) is not particularly limited and is preferably 25°C or higher and 150°C or lower, more preferably 30°C or higher and 120°C or lower, further preferably 40°C or higher and 100°C or lower. In the simultaneous addition method in which the compounds (C-1) and (C-2) are reacted while introduced at the same time to a reactor, the reaction temperature is preferably adjusted to a predetermined temperature by preliminarily setting the temperature of the reactor to a predetermined temperature and adjusting the temperature in the reactor to a predetermined temperature while performing the simultaneous addition. In the method of charging a reactor with the compound (C-2) in advance and then introducing the compound (C-1) to the reactor, the reaction temperature is preferably adjusted to a predetermined temperature by adjusting the temperature of the reactor charged with the silicon chloride compound to a predetermined temperature and adjusting the temperature in the reactor to a predetermined temperature while introducing the organic magnesium compound to the reactor. In the method of charging a reactor with the compound (C-1) in advance and then introducing the compound (C-2) to the reactor, the reaction temperature is preferably adjusted to a predetermined temperature by adjusting the temperature of the reactor charged with the compound (C-1) to a predetermined temperature and adjusting the temperature in the reactor to a predetermined temperature while introducing the compound (C-2) to the reactor.

Next, the organic magnesium compound (C-4) will be described. The compound (C-4) is preferably represented by the formula 5(C-4):

$$(C\text{-}4)\text{: } (M^1)_\alpha (Mg)_\beta (R^2)_a (R^3)_b Y^1{}_c \cdots \qquad \text{Formula 5}$$

wherein $M^1$ represents a metal atom selected from the group consisting of groups 12, 13, and 14 of the periodic system; $R^2$ and $R^3$ each represent a hydrocarbon group having 2 or more and 20 or less carbon atoms; $Y^1$ represents any of alkoxy, siloxy, allyloxy, amino, amide, -N=C-$R^4$, $R^5$, -$SR^6$ (wherein $R^4$, $R^5$, and $R^6$ each represent a hydrocarbon group having 1 or more and 20 or less carbon atoms, and when c is 2, $Y^1$ moieties may be different from each other), and a β-keto acid residue; and α, β, a, b, and c each represent a real number that satisfies the following relationships: $0 \leq \alpha$, $0 < \beta$, $0 \leq a$, $0 \leq b$, $0 < a + b$, $0 \leq c / (\alpha + \beta) \leq 2$, and $n\alpha + 2\beta = a + b + c$ (wherein n represents the valence of $M^1$).

The amount of the compound (C-4) used is preferably 0.1 or more and 10 or less, more preferably 0.5 or more and 5 or less, in terms of the molar ratio of magnesium atom contained in the compound (C-4) to titanium atom contained in the compound (C-5).

The temperature of the reaction between the compounds (C-4) and (C-5) is not particularly limited and is -80°C or higher and 150°C or lower, preferably -40°C or higher and 100°C or lower, more preferably within the range of -40°C or higher and 10°C or lower.

The concentration of the compound (C-4) in use is not particularly limited and is preferably 0.1 mol/L or higher and 2 mol/L or lower, more preferably 0.5 mol/L or higher and 1.5 mol/L or lower, on the basis of titanium atom contained in the compound (C-4). An inert hydrocarbon solvent is preferably used for diluting the compound (C-4).

The order in which the compounds (C-4) and (C-5) are added to the carrier (C-3) is not particularly limited. Any of the following methods can be used: the compound (C-5) is added subsequently to the compound (C-4); the compound (C-4) is added subsequently to the compound (C-5); and the compounds (C-4) and (C-5) are added at the same time. Among them, a simultaneous addition method in which a reactor is charged with the carrier (C-3) in advance and then the compounds (C-4) and (C-5) are reacted while introduced at the same time to the reactor is preferred from the viewpoint of decreasing entanglement, and a mixture of dialkyl magnesium and triethyl aluminum is preferably used for the compound (C-4). The mixing proportion of the compound (C-4), in terms of the molar ratio relative to aluminum (Mg/Al), is preferably 1 or more and 100 or less, and more preferably 4 or more and 10 or less. The dispersibility of organic magnesium is improved by mixing organic aluminum.

The reason why the compounds (C-4) and (C-5) can be simultaneously added to control the molecular mobility index is considered because precipitation of a fine particle catalyst occurs not on a carrier surface, but in an inert hydrocarbon solvent, and such each fine particle catalyst is independently supported on the carrier surface to suppress aggregation of active sites.

It is further considered that dialkyl magnesium is used as the compound (C-4) to make the reaction more vigorous, thereby providing a finer particle catalyst. A method in which the compounds (C-4) and (C-5) are simultaneously added is preferred. The temperature of the reaction between the compounds (C-4) and (C-5) is preferably -40°C or higher and 10°C or lower. The aforementioned temperature range inhibits by-products from occurring and allows uniformity during fine particle catalyst production to be kept even in such vigorous reaction.

The reaction between the compounds (C-4) and (C-5) is carried out in an inert hydrocarbon solvent, preferably in an aliphatic hydrocarbon solvent such as hexane or heptane. The catalyst thus obtained is used as a slurry solution with an inert hydrocarbon solvent.

Next, the compound (C-5) will be described. In the present embodiment, the compound (C-5) is a titanium compound represented by the formula 6:

$$(C\text{-}5)\text{: } Ti(OR^7)_d X^1_{(4-d)} \ldots \qquad \text{Formula 6}$$

wherein d represents a real number of 0 or larger and 4 or smaller; $R^7$ represents a hydrocarbon group having 1 or more and 20 or less carbon atoms; and $X^1$ represents a halogen atom.

In the formula 6, specific examples of the hydrocarbon group represented by $R^7$ include, but are not particularly limited to: aliphatic hydrocarbon groups such as a methyl group, an ethyl group, a propyl group, a butyl group, a pentyl group, a hexyl group, a 2-ethylhexyl group, a heptyl group, an octyl group, a decyl group, and an aryl group; alicyclic hydrocarbon groups such as a cyclohexyl group, a 2-methylcyclohexyl group, and a cyclopentyl group; and aromatic hydrocarbon groups such as a phenyl group and a naphthyl group. Among them, aliphatic hydrocarbon groups are preferred. Specific examples of the halogen atom represented by $X^1$ include, but are not particularly limited to, chlorine, bromine, and iodine. Among them, chlorine is preferred. One compound selected from these compounds may be used alone as the compound (C-5), or two or more compounds selected from these compounds may be used as a mixture.

The amount of the titanium compound (C-5) used is not particularly limited, and the molar ratio (Ti/Mg) of titanium to magnesium atom contained in the carrier (C-3) is preferably 1/4 or less, more preferably 1/8 or less, more preferably 1/16 or less, and further preferably 1/32 or less from the viewpoint of extension of the distance between active sites. The molar ratio (Ti/Mg) of titanium to magnesium atom contained in the carrier is preferably the upper limit or less because the active site density on a catalyst surface can be reduced, the number of active sites each having an aggregation structure can be decreased, and entanglement at the initial stage of polymerization can be decreased. In this regard, a molar ratio of 1/64 or more is preferred in terms of catalytic activity.

The reaction temperature for the compound (C-5) is not particularly limited and is preferably -80°C or higher and 150°C or lower, more preferably -40°C or higher and 100°C or lower, and further preferably within the range of -20°C or higher and 60°C or lower.

In the present embodiment, the method for allowing the compound (C-5) to be supported by the carrier (C-3) is not particularly limited and may involve reacting an excess of the compound (C-5) with the carrier (C-3) and/or using a third component to efficiently support the compound (C-5). A method of achieving this supporting through the reaction between the compound (C-5) and the organic magnesium compound (C-4) is preferred.

[Treatment of Solid Catalyst Surface]

Another example of the Ziegler-Natta catalyst used in the present embodiment is also preferably a catalyst for olefin polymerization comprising a solid catalyst [C] and an organic metal compound component [B], wherein the solid catalyst [C] is produced by reaction with an organic aluminum compound (C-6) represented by formula 7 which is soluble in an inert hydrocarbon solvent (hereinafter, also referred to as "surface treatment") and surface treatment of the solid catalyst.

$$(C\text{-}6): \ AlR^{12}_jZ^1_{(3-j)} \ ... \qquad \text{Formula 7}$$

wherein $R^{12}$ represents a hydrocarbon group having 1 or more and 20 or less carbon atoms; $Z^1$ represents a group selected from the group consisting of a hydrogen atom, a halogen atom, alkoxy, allyloxy, and siloxy groups; and j represents any number of 2 or larger and 3 or smaller.

In the formula 7, specific examples of the hydrocarbon group having 1 or more and 20 or less carbon atoms, represented by $R^{12}$ include, but are not particularly limited to, aliphatic hydrocarbons, aromatic hydrocarbons, and alicyclic hydrocarbons, for example, trialkyl aluminum compounds such as trimethyl aluminum, triethyl aluminum, tripropyl aluminum, tributyl aluminum, tri(2-methylpropyl)aluminum (or triisobutyl aluminum), tripentyl aluminum, tri(3-methylbutyl)aluminum, trihexyl aluminum, trioctyl aluminum, and tridecyl aluminum; aluminum halide compounds such as diethyl aluminum chloride, ethyl aluminum dichloride, bis(2-methylpropyl)aluminum chloride, ethyl aluminum sesquichloride, and diethyl aluminum bromide; alkoxy aluminum compounds such as diethyl aluminum ethoxide and bis(2-methylpropyl) aluminum butoxide; siloxy aluminum compounds such as dimethylhydrosiloxy aluminum dimethyl, ethylmethylhydrosiloxy aluminum diethyl, and ethyldimethylsiloxy aluminum diethyl; and mixtures thereof. Among them, trialkyl aluminum compounds, diethyl aluminum chloride, ethyl aluminum dichloride, and ethyl aluminum sesquichloride are particularly preferred.

The amount of the compound (C-6) used is preferably 0.1 or more and 10 or less, and more preferably 0.5 or more and 5 or less, in terms of the molar ratio of aluminum atom contained in the compound (C-6) to titanium atom contained in the solid catalyst [C].

The temperature of the reaction between the compound (C-6) and the solid catalyst [C] is not particularly limited, and is -80°C or higher and 150°C or lower, preferably -40°C or higher and 100°C or lower, and more preferably within the range of 0°C or higher and 60°C or lower.

The concentration of the compound (C-6) in use is not particularly limited and is preferably 0.1 mol/L or higher and 2 mol/L or lower, more preferably 0.5 mol/L or higher and 1.5 mol/L or lower, on the basis of aluminum atom contained in the compound (C-6). An inert hydrocarbon solvent is preferably used for diluting the compound (C-6).

A method for adding the compound (C-6) to the solid catalyst [C] is not particularly limited, and is preferably a method in which a reactor is charged with the solid catalyst [C] in advance and the compound (C-6) is added from the viewpoint of workability.

The solid catalyst [C] can be treated with the organic aluminum compound and thus reacted with a titanium compound supported on a catalyst surface, to not only play a role in allowing reduction reaction for the change in valence to occur, but also liberate an excess titanium compound

It is preferable from the viewpoint of entanglement control to treat a catalyst surface with the organic aluminum compound (C-6) because the active site density on the surface can be reduced to extend the distance between active sites.

In the present embodiment, washing (decantation) after catalyst synthesis is preferably performed four times or more. Such decantation is performed four times or more to result in tendencies to decrease unreacted raw materials and decrease the scale in polymerization.

[Promoter]

Next, the organic metal compound component [B] for use in the present embodiment will be described. The solid catalyst [A] or the solid catalyst [C] for use in the present embodiment can serve as a highly active catalyst for polymerization by combination with the organic metal compound component [B]. The organic metal compound component [B] is also called a "promoter. The organic metal compound component [B] is preferably a compound containing a metal selected from the group consisting of groups 1, 2, 12, and 13 of the periodic system, particularly preferably an organic aluminum compound and/or an organic magnesium compound.

Compounds represented by the following formula 7 are preferably used each alone or as a mixture as the organic aluminum compound:

$$AIR^{12}_jZ^1_{(3-j)} ...\qquad \text{Formula 7}$$

wherein $R^{12}$ represents a hydrocarbon group having 1 or more and 20 or less carbon atoms; $Z^1$ represents a group selected from the group consisting of a hydrogen atom, a halogen atom, alkoxy, allyloxy, and siloxy groups; and j represents any number of 2 or larger and 3 or smaller.

In the formula 7, specific examples of the hydrocarbon group having 1 or more and 20 or less carbon atoms, represented by $R^{12}$ include, but are not particularly limited to, aliphatic hydrocarbons, aromatic hydrocarbons, and alicyclic hydrocarbons, and a trialkyl aluminum compound is particularly preferred.

The organic magnesium compound is preferably an organic magnesium compound represented by the formula 3 which is soluble in an inert hydrocarbon solvent:

$$(M^2)_\gamma(Mg)_\delta(R^8)_e(R^9)_f(OR^{10})_g ...\qquad \text{Formula 3}$$

wherein $M^2$ represents a metal atom selected from the group consisting of groups 12, 13, and 14 of the periodic system; $R^8$, $R^9$, and $R^{10}$ each represent a hydrocarbon group having 2 or more and 20 or less carbon atoms; and $\gamma$, $\delta$, e, f, and g each represent a real number that satisfies the following relationships: $0 \leq \gamma$, $0 < \delta$, $0 \leq e$, $0 \leq f$, $0 \leq g$, $0 < e + f$, $0 \leq g / (y + \delta) \leq 2$, and $ky + 2\delta = e + f + g$ (wherein k represents the valence of $M^2$).

This organic magnesium compound is represented in the form of an organic magnesium complex compound soluble in an inert hydrocarbon solvent, but encompasses all of dialkyl magnesium compounds and their complexes with other metal compounds. Although $\gamma$, $\delta$, e, f, g, $M^2$, $R^8$, $R^9$, and $OR^{10}$ are as already defined, this organic magnesium compound is preferably a compound wherein the ratio $\delta / \gamma$ is in the range of 0.5 or more and 10 or less, more preferably a compound wherein $M^2$ is aluminum, because a compound having higher solubility in an inert hydrocarbon solvent is more preferred.

The organic aluminum compounds represented by the following formula 8 are preferably used each alone or as a mixture as the bulky organic metal compound component [B] from the viewpoint of apparently extending the distance between active sites involving in polymerization:

$$AIR^{12}_jR^{13}_kZ^1_{(3-(j + k))} ...\qquad \text{Formula 8}$$

wherein $R^{12}$ represents a hydrocarbon group having 1 or more and 20 or less carbon atoms; $R^{13}$ represents a bulky hydrocarbon group; $Z^1$ represents a group selected from the group consisting of a hydrogen atom, a halogen atom, alkoxy, allyloxy, and siloxy groups; and j and k each represent a real number that satisfies the following relationships: $0 < j$, $0 < k$, and $0 < j + k \leq 3$.

In the formula 8, specific examples of the bulky hydrocarbon group represented by $R^{13}$ include, but are not particularly limited to, groups respectively containing a 2,6-di-tertbutylphenoxy group, a 2,6-di-tertbutyl-4-methylphenoxy group, a 2,6-di-tertbutyl-4-ethylphenoxy group, a 2,4,6-tri-tertbutylphenoxy group, a 2,6-diisopropylphenoxy group, a 2,6-di-sec-butylphenoxy group, a 2,6-dicyclohexylphenoxy group, and a 2,6-diphenylphenoxy group. The distance between active sites activated by the steric hindrance of the bulky promoter is extended. The bulky promoter is particularly preferably (2,6-di-tertbutyl-4-methylphenoxy) diethyl aluminum.

Alternatively, the organic aluminum compound of the formula 7 and dibutylhydroxytoluene (BHT) dissolved in an inert hydrocarbon solvent are preferably mixed at a proportion of 0.9 to 1.9, in terms of the molar ratio (BHT/AI) relative to aluminum.

The ratio between the solid catalyst [A] or the solid catalyst [C] and the organic metal compound component [B] to be combined is not particularly limited and is preferably 1 mmol or higher and 3,000 mmol or lower of the organic metal compound component [B] per g of the solid catalyst [A] or the solid catalyst [C].

A method for adding the organic metal compound component [B] into a polymerization system in polymerization conditions is not particularly limited, the compound component may be added into the polymerization system, separately from the catalyst component, or may be reacted with the catalyst component in advance and then added into the polymerization system.

The concentration of the organic metal compound component [B] in the polymerization system is not particularly limited and is preferably 0.001 mmol/L or more and 10 mmol/L or less, more preferably 0.01 mmol/L or more and 5 mmol/L or less, and further preferably 0.05 mmol/L or more and 2 mmol/L or less from the viewpoint of complete capturing of impurities and from the viewpoint of the amount of a metal residue in the polymer.

On the other hand, it is preferable for obtaining the ultrahigh-molecular-weight polyethylene powder of the present embodiment to provide a structure in which molecular chains easily slide, and examples include a method involving generating a non-branched linear polymer. Specifically, the organic metal compound component [B] is preferably used as a mixture of two or more kinds thereof.

[Method for Producing Ultrahigh-molecular-weight Polyethylene Powder by Polymerization]

Examples of the method for producing the ultrahigh-molecular-weight polyethylene powder of the present embodiment include, but are not limited to, a slurry polymerization method, a gas phase polymerization method, and a solution polymerization method. Among these, a slurry polymerization method capable of efficiently removing heat of polymerization is preferred.

The medium usable in the slurry polymerization method may be an inert hydrocarbon medium or an olefin itself. Examples of the inert hydrocarbon medium can include, but are not limited to, aliphatic hydrocarbons such as propane, butane, isobutane, pentane, isopentane, hexane, heptane, octane, decane, dodecane, and kerosene oil; alicyclic hydrocarbons such as cyclopentane, cyclohexane, and methylcyclopentane; aromatic hydrocarbons such as benzene, toluene, and xylene; halogenated hydrocarbons such as ethyl chloride, chlorobenzene, and dichloromethane; and mixtures thereof.

The polymerization reaction in the method for producing the polyethylene powder of the present embodiment can be carried out by any of batch, semicontinuous, and continuous methods.

Alternatively, the polymerization may be carried out at two or more stages differing in reaction conditions.

In the method for producing the polyethylene powder of the present embodiment, the range of the polymerization temperature for the ethylene polymer is preferably 30°C or higher and 100°C or lower, more preferably 35°C or higher and 95°C or lower, and still more preferably 40°C or higher and 90°C or lower.

The polymerization temperature equal to or higher than 30°C can allow for industrially efficient production. On the other hand, the polymerization temperature equal to or lower than 100°C can allow for suppression of block-like scale generation ascribable to partial melting of the polymer, and can allow for continuous and stable production without clogging of any pipe.

In the method for producing the polyethylene powder of the present embodiment, the range of the polymerization pressure for the ethylene polymer is preferably atmospheric pressure or higher and 2 MPaG or lower, more preferably 0.2 MPaG or higher and 1.5 MPaG or lower, and still more preferably 0.3 MPaG or higher and 0.9 MPaG or lower.

The polymerization pressure equal to or higher than atmospheric pressure can allow for industrially efficient production. On the other hand, the polymerization pressure equal to or lower than 2 MPaG tends to allow for stable production without block-like scale generation ascribable to rapid polymerization in a polymerization reactor.

The molecular weight of the ethylene polymer can be adjusted by, for example, by the presence of hydrogen in the polymerization system or by the change of the polymerization temperature, as described in, for example, the specification of West German Patent Application Publication No. 3127133.

The addition of hydrogen as a chain transfer agent into the polymerization system can control the molecular weight within a proper range. In the case of adding hydrogen into the polymerization system, the range of the mole fraction of the hydrogen is preferably 0 mol% or more and 30 mol% or less, more preferably 0 mol% or more and 25 mol% or less.

The hydrogen can be contacted with a catalyst in advance and then added into the polymerization system through a catalyst introduction line. Immediately after introduction of the catalyst into the polymerization system, the catalyst concentration is high near an introduction line exit to allow rapid polymerization to progress, and a local high-temperature state can likely occur. On the other hand, the hydrogen and the catalyst can be contacted and then introduced into the polymerization system to suppress the initial activity of the catalyst and suppress block-like scale generation ascribable to rapid polymerization, inactivation of the catalyst at high temperature, and the like.

In general, in the generation of the ethylene polymer, an antistatic agent such as Stadis or STATSAFE manufactured by Innospec (agent: Maruwa Bussan K.K.) can be used for suppressing static electric adhesion of the polymer to a polymerization reactor.

The antistatic agent such as Stadis or STATSAFE can be added with a pump or the like to the polymerization reactor in the form of a diluent in an inert hydrocarbon medium. At this point, the amount to be added is preferably 1 ppm or more and 500 ppm or less, and more preferably 10 ppm or more and 100 ppm or less with respect to a production amount of an ethylene polymer per unit time in a method in which it is precedently added to a solid catalyst, added to the polymerization reactor or the like.

In the present embodiment, in addition to each component as mentioned above, other components (additive and the like) to be useful in production (generation) of the polyethylene can be used.

As a solvent separation method employed in the polymerization step of the polyethylene powder of the present embodiment, any one of a decantation method, a centrifugation method, a filtration method, and the like may be employed, and the filtration method is preferred because of easiness of separation between the ethylene polymer and the solvent.

A method for inactivating the catalyst used in the polymerization step of the ethylene polymer to be contained in the polyethylene powder of the present embodiment is not especially limited, and inactivation of the catalyst is performed preferably after separating the ethylene polymer and the solvent.

When an agent for inactivating the catalyst is introduced after separating the polyethylene powder and the solvent, a low-molecular-weight component, a catalyst component and the like contained in the solvent can be suppressed from precipitating in the ethylene polymer.

The agent for inactivating the catalyst is not especially limited, and examples include oxygen, water, alcohols, glycols, phenols, carbon monoxide, carbon dioxide, ethers, carbonyl compounds, and alkynes.

In the method for producing the polyethylene powder of the present embodiment, a drying step is preferably performed after separating the ethylene polymer from the solvent. In the drying step, a rotary kiln dryer, a paddle dryer, a fluidized bed dryer or the like is preferably used. A drying temperature is preferably 30°C or more and 150°C or less.

Besides, it is effective to introduce an inert gas of nitrogen or the like into the drier for accelerating the drying. At this point, it is more effective to employ a method in which steam or the like is used together with the agent for inactivating the catalyst.

After drying the ethylene polymer to be contained in the polyethylene powder of the present embodiment, the resultant powder may be sifted for removing a coarse powder.

The polyethylene powder of the present embodiment may be a mixture of a plurality of polyethylene powders including the ethylene polymer obtained by the above-described production method.

Known additive(s) such as a slip agent, a neutralizer, an antioxidant, a light stabilizer, an antistatic agent, and/or a pigment may be, if necessary, used in combination.

Examples of the slip agent or the neutralizer include, but are not particularly limited to, aliphatic hydrocarbons, higher fatty acids, higher fatty acid metal salts, fatty acid esters of alcohols, waxes, higher fatty acid amides, silicone oil, and rosin. Specific examples of a suitable additive can include stearates such as calcium stearate, magnesium stearate, and zinc stearate. The content of the slip agent or the neutralizer is not particularly limited and is 5000 ppm or lower, 4000 ppm or lower, or 3000 ppm or lower.

The antioxidant is not particularly limited and is preferably, for example, a phenol compound or a phenol-phosphorus compound, specifically include: phenol antioxidants such as 2,6-di-t-butyl-4-methylphenol(dibutylhydroxytoluene), n-octadecyl-3-(4-hydroxy-3,5-di-t-butylphenyl)propionate, and tetrakis(methylene(3,5-di-t-butyl-4-hydroxyhydrocinnamate))methane; phenol-phosphorus antioxidants such as 6-[3-(3-t-butyl-4-hydroxy-5-methylphenyl)propoxy]-2,4,8,10-tetra-t-butyldibenzo[d,f][1,3,2]dioxaphosphepin; and phosphorus antioxidants such as tetrakis(2,4-di-t-butylphenyl)-4,4'-biphenylene-di-phosphonite, tris(2,4-di-t-butylphenyl)phosphite, and cyclic neopentane tetraylbis(2,4-t-butylphenyl phosphite). The content of the antioxidant is not particularly limited, and is 5% or lower, preferably 3% or lower, and more preferably 1% or lower. With an antioxidant content of 5% or lower, embrittlement and/or discoloration, reduction in mechanical properties, etc. are less likely to occur, because of the suppressed degradation of polyethylene, resulting in better long-term stability.

Examples of the light stabilizer include, but are not particularly limited to: benzotriazole light stabilizers such as 2-(5-methyl-2-hydroxyphenyl)benzotriazole and 2-(3-t-butyl-5-methyl-2-hydroxyphenyl)-5-chlorobenzotriazole; and hindered amine light stabilizers such as bis(2,2,6,6-tetramethyl-4-piperidine)sebacate and poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}]. The content of the light stabilizer is not particularly limited and is 5000 ppm or lower, preferably 3000 ppm or lower, more preferably 2000 ppm or lower.

Examples of the antistatic agent include, but are not particularly limited to, aluminosilicate, kaolin, clay, natural silica, synthetic silica, silicates, talc, diatomaceous earth, and glycerin fatty acid ester.

[Use]

The ultrahigh-molecular-weight polyethylene powder of the present embodiment can be used as a raw material for various molded articles such as microporous membranes, fibers, in particular, high-strength fibers, sintered articles, press molded articles, and ram-extrusion molded articles.

The polyethylene powder of the present embodiment is particularly suitable as a raw material for high-strength fiber.

[Molded Article]

The molded article of the present embodiment is a molded article of the ultrahigh-molecular-weight polyethylene powder of the present embodiment mentioned above.

Examples of the method for producing the molded article include, but are not particularly limited to, a molding method which includes the steps of extruding, drawing, extracting, and drying a resin with a wet extrusion method.

Examples of the method for producing the fiber (e.g., high-strength fiber) include, but are not particularly limited to, a method of kneading and spinning liquid paraffin and the ultrahigh-molecular-weight polyethylene powder mentioned above, followed by heating and drawing. Specific examples thereof include, but are not particularly limited to, a production method under the following general swelling conditions.

The ultrahigh-molecular-weight polyethylene powder, liquid paraffin, and optionally an additive such as an antioxidant are blended and stirred at a temperature lower by 30°C or more than the melting point ($T_{m2}$) of the ultrahigh-molecular-weight polyethylene powder to prepare a liquid in a slurry form. The obtained liquid in a slurry form is charged into a kneader, kneaded at a given temperature. Then, spinning is performed through a spinneret attached to the tip of an extruder. Next, a discharged thread containing liquid paraffin is wound at a location distant from the spinneret. Subsequently, in order to remove liquid paraffin from the wound thread, the thread is dipped in hexane for extraction operation and then dried.

The obtained thread can be primarily drawn in a thermostat bath and subsequently secondarily drawn in a thermostat bath immediately before being broken to obtain a high-strength fiber (drawn thread).

[High-strength Fiber]

A specific example of a method for producing a high-strength fiber includes a production method including a slurry preparing step, a gelling step, an arbitrary kneading step, an arbitrary extrusion preparation step, an extruding step, an arbitrary rapidly cooling step, an extracting step, and a yarn drawing step.

(Slurry Preparing Step)

The slurry preparing step is a step of mixing the ultrahigh-molecular-weight polyethylene powder and first liquid paraffin, and stirring the resulting mixture at a temperature equal to or lower than a melting point of the ultrahigh-molecular-weight polyethylene powder to thereby obtain a slurry.

The stirring temperature is preferably 25°C or more and 120°C or less, more preferably 50°C or more and 115°C or less, further preferably 80°C or more and 110°C or less, and particularly preferably 90°C or more and 105°C or less.

When the stirring temperature is 25°C or more, the liquid paraffin can be efficiently impregnated into pores of the ultrahigh-molecular-weight polyethylene powder. When the stirring temperature is 120°C or less, the surface of the ultrahigh-molecular-weight polyethylene powder is suppressed from melting for preventing fusion among particles of the powder, and thus, a homogenous gel having disentangled molecular chains can be obtained.

(Gelling Step)

The gelling step is a step of mixing the slurry and second liquid paraffin having a temperature of 150°C or more and 300°C or less to obtain a gel for a yarn having a temperature of 140°C or more and 200°C or less.

When the temperature of the gel for a yarn is 140°C or more, a homogeneous gel having disentangled molecular chains can be obtained in a short period of time. When the temperature is 200°C or less, great reduction of the molecular weight due to thermal decomposition can be suppressed.

The temperature of the second liquid paraffin is preferably 150°C or more and 250°C or less, more preferably 150°C or more and 200°C or less, and further preferably 150°C or more and 180°C or less.

The temperature of the gel for a yarn is preferably 140°C or more and 190°C or less, more preferably 140°C or more and 180°C or less, and further preferably 140°C or more and 170°C or less.

A polyethylene concentration in the gel for a yarn is preferably 3% by mass or more and 20% by mass or less, more preferably 3% by mass or more and 15% by mass or less, further preferably 3% by mass or more and 10% by mass or less, and particularly preferably 3% by mass or more and 8% by mass or less.

When the polyethylene concentration in the gel for a yarn is 3% by mass or more, a yarn having less unevenness of thread diameter can be stably spun. When the polyethylene concentration is 20% by mass or less, a yarn in which molecular chains are disentangled can be obtained.

(Kneading Step)

The kneading step is a step of kneading the gel for a yarn.

A kneading temperature is preferably 140°C or more and 200°C or less, more preferably 140°C or more and 180°C or less, further preferably 140°C or more and 170°C or less, and particularly preferably 150°C or more and 160°C or less.

When the kneading temperature is 140°C or more, a homogenous gel having disentangled molecular chains can be obtained. When the kneading temperature is 200°C or less, great reduction of the molecular weight due to thermal decomposition can be suppressed.

A kneading time is preferably 5 minutes or more and 180 minutes or less, more preferably 10 minutes or more and 150 minutes or less, further preferably 15 minutes or more and 90 minutes or less, and particularly preferably 30 minutes or more and 60 minutes or less.

When the kneading time is 5 minutes or more, a homogenous gel having disentangled molecular chains can be obtained. When the kneading time is 180 minutes or less, great reduction of the molecular weight due to thermal decomposition can be suppressed.

A rotational speed in the kneading is preferably 3 rpm or more and 50 rpm or less, more preferably 3 rpm or more and 30 rpm or less, further preferably 3 rpm or more and 20 rpm or less, and particularly preferably 3 rpm or more and 10 rpm or less.

When the rotational speed in the kneading is 3 rpm or more, a homogenous gel having disentangled molecular chains can be obtained. When the rotational speed is 50 rpm or less, great reduction of the molecular weight due to thermal decomposition can be suppressed.

(Extrusion Preparation Step)

The extrusion preparation step is a step of making preparation before extruding the gel for a yarn. Specific examples of the extrusion preparation include temperature adjustment, and deaeration of the gel for a yarn.

A temperature in the extrusion preparation step is preferably 140°C or more and 200°C or less, more preferably 140°C or more and 190°C or less, further preferably 140°C or more and 180°C or less, and particularly preferably 150°C or more and 180°C or less.

When the temperature in the extrusion preparation step is 140°C or more, the liquid paraffin is prevented from flowing out of the gel for a yarn to suppress variation of the gel concentration, and thus, a yarn can be stably obtained. When the temperature is 200°C or less, great reduction of the molecular weight due to thermal decomposition can be suppressed.

A time of the extrusion preparation step (e.g., a time of deaeration) is preferably 5 minutes or more and 90 minutes or less, more preferably 5 minutes or more and 60 minutes or less, further preferably 15 minutes or more and 60 minutes or less, and particularly preferably 30 minutes or more and 60 minutes or less.

When the time of the extrusion preparation step is 5 minutes or more, the gel for a yarn can be sufficiently deaerated, and a yarn can be stably obtained. When the time is 90 minutes or less, great reduction of the molecular weight due to thermal decomposition can be suppressed.

(Extruding Step)

The extruding step is a step of extruding the gel for a yarn to obtain a yarn.

An extrusion rate is preferably 5 mm/min or more and 20 mm/min or less, more preferably 5 mm/min or more and 15 mm/min or less, further preferably 7.5 mm/min or more and 12 mm/min or less, and particularly preferably 7.5 mm/min or more and 10 mm/min or less.

When the extrusion rate is 5 mm/min or more, the yarn can be collected without applying tension thereto, and the yarn can be drawn by many times in the yarn drawing step, and thus, a highly oriented (high-strength) yarn can be obtained. When the rate is 20 mm/min or less, the discharge amount can be stabilized, and thus, a yarn having less unevenness of thread diameter can be stably obtained.

A winding rate is preferably 200 mm/min or more and 1600 mm/min or less, more preferably 200 mm/min or more and 1400 mm/min or less, further preferably 250 mm/min or more and 1000 mm/min or less, and particularly preferably 500 mm/min or more and 800 mm/min or less.

When the winding rate is 200 mm/min or more, the yarn can be collected without applying tension thereto, and the yarn can be drawn by many times in the yarn drawing step, and thus, a highly oriented (high-strength) yarn can be obtained. When the winding rate is 1600 mm/min or less, the discharge amount can be stabilized, and thus, a yarn having less unevenness of thread diameter can be stably obtained.

The discharge amount is preferably 0.2 g/min or more and 1.5 g/min or less, more preferably 0.2 g/min or more and 1.2 g/min or less, further preferably 0.2 g/min or more and 1.0 g/min or less, and particularly preferably 0.3 g/min or more and 0.8 g/min or less.

When the discharge amount is 0.2 g/min or more, the yarn can be collected without applying tension thereto, and the yarn can be drawn by many times in the yarn drawing step, and thus, a highly oriented (high-strength) yarn can be obtained. When the discharge amount is 1.5 g/min or less, melt fracture is suppressed, and thus, a yarn having less unevenness of thread diameter can be stably obtained.

A spinning diameter is preferably 0.8 mm or more and 1.5 mm or less, more preferably 0.8 mm or more and 1.2 mm or less, further preferably 0.8 mm or more and 1.0 mm or less, and particularly preferably 0.9 mm or more and 1.0 mm or less.

When the spinning diameter is 0.8 mm or more, the diameter of the yarn after extraction of the liquid paraffin can be adjusted to a thickness at some level, and the yarn can be drawn by many times in the yarn drawing step, and thus, a highly oriented (high-strength) yarn can be obtained. When the diameter is 1.5 mm or less, a time for extracting the liquid paraffin from the yarn can be shortened, and hence the extraction operation can be efficiently completed.

(Rapidly Cooling Step)

The rapidly cooling step is a step of rapidly cooling the yarn. The rapid cooling method is not especially limited, and an example includes a method in which the yarn is allowed to pass through a water bath.

A time from the extruding step to the rapidly cooling step (e.g., a time until an extruded yarn enters a water bath) is preferably 0 second or more and 10 seconds or less, more preferably 0 second or more and 5 seconds or less, and further preferably 0 second or more and 2 seconds or less.

When the time from the extruding step to the rapidly cooling step is 10 seconds or less, a yarn in a molten state can be rapidly solidified to minimize unevenness of the yarn diameter.

When the yarn is allowed to pass through a water bath in the rapidly cooling step, a distance from a spinning nozzle to the water surface of the water bath is preferably 0 cm or more and 10 cm or less, more preferably 1 cm or more and 8 cm or less, further preferably 1 cm or more and 5 cm or less, and particularly preferably 1 cm or more and 3 cm or less.

When the distance from the spinning nozzle to the water surface of the water bath is 10 cm or less, the yarn in a molten state can be rapidly solidified to minimize unevenness of the yarn diameter.

A temperature in the rapidly cooling step is preferably 5°C or more and 30°C or less, more preferably 5°C or more and 25°C or less, further preferably 5°C or more and 20°C or less, and particularly preferably 5°C or more and 15°C or less.

When the temperature in the rapidly cooling step is 5°C or more, cost for cooling can be suppressed for efficient production. When the temperature is 30°C or less, the yarn in a molten state can be rapidly solidified to minimize unevenness of the yarn diameter.

(Extracting Step)

The extracting step is a step of extracting the first liquid paraffin and the second liquid paraffin from the yarn to obtain a yarn for drawing.

For extracting the liquid paraffin, an extraction solvent is preferably used. The extraction solvent is not especially limited, and examples include hexane and dichloromethane.

An extraction method is not especially limited, and an example includes a method in which the yarn is dipped in the extraction solvent.

An extraction time is preferably 3 hours or more and 24 hours or less, more preferably 3 hours or more and 20 hours or less, further preferably 5 hours or more and 20 hours or less, and particularly preferably 10 hours or more and 20 hours or less.

When the extraction time is 3 hours or more, the liquid paraffin can be extracted to an extent that the resultant does not have a problem as the yarn for drawing. When the amount of the liquid paraffin remaining in the yarn for drawing is large, mobility of the molecular chains is so high when heat is applied in the yarn drawing step that the resultant is easily highly oriented, but this state is difficult to retain (the state easily returns to a state prior to being highly oriented). Therefore, it is difficult to obtain a high-strength fiber. When the time is 24 hours or less, the yarn for drawing can be efficiently obtained without deteriorating the productivity.

(Yarn Drawing Step)

The yarn drawing step is a step of thermally drawing the yarn for drawing.

The drawing is preferably multistage drawing, and more preferably two-stage drawing. The two-stage drawing preferably includes a primary drawing step, and a secondary drawing step.

((Primary Drawing Step))

A feeding rate is preferably 50 mm/min or more and 200 mm/min or less, more preferably 50 mm/min or more and 150 mm/min or less, further preferably 50 mm/min or more and 120 mm/min or less, and particularly preferably 50 mm/min or more and 100 mm/min or less.

A winding rate is preferably 1000 mm/min or more and 4000 mm/min or less, more preferably 1000 mm/min or more and 3500 mm/min or less, further preferably 1500 mm/min or more and 3500 mm/min or less, and particularly preferably 2000 mm/min or more and 3000 mm/min or less.

A draw ratio is controlled by adjusting the feeding rate and the winding rate, and is set also in consideration of productivity.

A drawing temperature is preferably 110°C or more and 155°C or less, more preferably 110°C or more and 150°C or less, further preferably 115°C or more and 145°C or less, and particularly preferably 120°C or more and 140°C or less.

When the drawing temperature is 110°C or more, the drawing can be performed in the state in which the mobility of the molecular chains is high, and hence high orientation can be attained. When the temperature is 155°C or less, the yarn for drawing can be drawn without being melted.

((Secondary Drawing Step))

A feeding rate is preferably 50 mm/min or more and 200 mm/min or less, more preferably 50 mm/min or more and 150 mm/min or less, further preferably 50 mm/min or more and 120 mm/min or less, and particularly preferably 50 mm/min or more and 100 mm/min or less.

A winding rate is preferably 100 mm/min or more and 500 mm/min or less, more preferably 100 mm/min or more and 450 mm/min or less, further preferably 150 mm/min or more and 400 mm/min or less, and particularly preferably 200 mm/min or more and 300 mm/min or less.

A draw ratio is controlled by adjusting the feeding rate and the winding rate, and is set also in consideration of productivity.

A drawing temperature is preferably 130°C or more and 155°C or less, more preferably 130°C or more and 150°C or less, further preferably 135°C or more and 150°C or less, and particularly preferably 140°C or more and 150°C or less.

When the drawing temperature is 130°C or more, the drawing can be performed in the state in which the mobility of the molecular chains is high, and hence high orientation can be attained. When the temperature is 155°C or less, a primarily drawn yarn can be drawn without being melted.

Examples

Hereinafter, the present invention will be described more specifically with reference to Examples and Comparative Examples. However, the present invention is not intended to be limited by Examples below by any means. Various operations were performed at room temperature, unless particularly noted.

In the present application, ethylene and hexane used in Examples and Comparative Examples were dehydrated using MS-3A (manufactured by UNION SHOWA K.K.). The hexane was used after being further deoxidated by deaeration under reduced pressure using a vacuum pump.

The physical properties of ultrahigh-molecular-weight polyethylene powders of Examples and Comparative Examples were measured by the following methods.

(1) Intrinsic viscosity IV

The intrinsic viscosity IV of each polyethylene powder obtained in Examples and Comparative Examples was measured in accordance with ISO1628-3 (2010).

A solvent used here was 20 mL of decahydronaphthalene (supplemented with 1 g/L 2,6-di-t-butyl-4-methylphenol) deaerated with a vacuum pump and purged with nitrogen.

The viscosity tube used was a Cannon-Fenske viscometer (manufactured by Sibata Scientific Technology Ltd.: product No. -100). Measurement was performed continuously 3 times, and an average of three values obtained was adopted.

(2) Mobility index and degree of entanglement of ultrahigh-molecular-weight polyethylene powder-containing slurry

The mobility index and the degree of entanglement of the ultrahigh-molecular-weight polyethylene powder obtained in each of Examples and Comparative Examples were measured using pulse NMR. A sample small tube having a diameter of 7 mm and a height of 45 mm was filled with 0.12 g of the polyethylene powder, 0.28 g of liquid paraffin (liquid paraffin manufactured by MORESCO Corp. (product name: Smoil P-350P)), and 0.004 g of an antioxidant (antioxidant (ADK STAB AO60G) manufactured by ADEKA CORPORATION) to prepare a slurry. The sample small tube in which the slurry was placed was placed in a sample tube for measurement having a diameter of 9 mm and a height of 180 mm, and left to stand for 20 hours in a constant temperature room regulated at a temperature of 22°C and a humidity of 60% to provide a sufficient impregnation time, thereby producing a sample. The sample tube for measurement was charged into a TD-NMR apparatus (model: minispec mq20) manufactured by Bruker set such that the internal temperature was 30°C, and the sample was heated in accordance with <Temperature Increase Conditions> shown below.

Liquid paraffin used during slurry mobility measurement was liquid paraffin manufactured by MORESCO Corp. (product name: Smoil P-350P), and representative properties thereof were as follows: density at 15°C: 0.866 g /cm$^3$, pour point: -10°C, kinematic viscosity at 40°C: 68.00 mm2/s (cSt), kinematic viscosity at 100°C: 9.188 mm2/s (cSt), ring analysis Cn: 30%, Cp: 70%, average molecular weight :489 g /mol.

The temperatures shown in <Temperature Increase Conditions> below are values each obtained by measuring the internal temperature of a sample with a thermocouple.

<Temperature Increase Conditions>

temperature increase at 10°C/min and retention at 60°C for 23 minutes

temperature increase at 10°C/min and retention at 90°C for 23 minutes

temperature increase at 10°C/min and retention at 105°C for 23 minutes

temperature increase at 10°C/min and retention at 120°C for 23 minutes

temperature increase at 5°C/min and retention at 130°C for 26 minutes

temperature increase at 5°C/min and retention at 140°C for 26 minutes

temperature increase at 5°C/min and retention at 150°C for 10 minutes

The set temperature of the apparatus was corrected with calibration straight lines (Formula A) and (Formula B) in consideration of the deviation from the target temperature (actual temperature) of a sample. The value after the decimal point was rounded.

(in case of 0°C or more and 100°C or less) $y = 1.0984x + 260.88$

(Formula A)

(in case of more than 100°C and 200°C or less) $y = 1.1729x + 252.21$

(Formula B)

x = Target temperature (°C), y = Set temperature (K)

After the temperature increase was completed by the above-described procedures, the spin-spin relaxation time (T2, herein, also sometimes simply expressed as "relaxation time") at 150°C of the sample was measured in accordance with <Measurement Conditions> shown below.

<Measurement Conditions>

Magnetic field intensity: 0.47 T
Nuclide to be measured: 1 H (20 MHz)
Measurement procedure: Carr Purcell Meiboom Gill method
Cumulative number: 256 times
Repetition time: 3 sec
Interval ($\tau$) between first 90° pulse and 180° pulse: 0.04 msec
Total number of echo signals: 6400
Heater Power: 5%

The free induction decay (FID) obtained by measurement was subjected to curve fitting (fitting range: whole range, namely, t = 0.10032 to 567.8196) with an analysis program TD-NMR-A manufactured by Bruker. For fitting, the function shown in the following <Formula 1> was used.

<Formula 1>

$$f(t) = R\alpha \exp(-t/T\alpha) + R\beta \exp(-t/T\beta) + R\gamma \exp(-t/T\gamma)$$

wherein $R\alpha + R\beta + R\gamma = 100$

t: variable (time)
$T\alpha$: relaxation time (ms) of low-mobility component $\alpha$
$R\alpha$: abundance proportion of low-mobility component $\alpha$
$T\beta$: relaxation time (ms) of intermediate component $\beta$
$R\beta$: abundance proportion of intermediate component $\beta$
$T\gamma$: relaxation time (ms) of high-mobility component $\gamma$
$R\gamma$: abundance proportion of high-mobility component $\gamma$

Finally, the mobility index (ms) and the degree of entanglement were calculated from each relaxation time T and each abundance proportion R obtained by curve fitting of the free induction decay, and (Formula I) and (Formula II) shown below. This operation was performed continuously 5 times, and an average of three values excluding the maximum and minimum values was calculated to calculate final mobility index and degree of entanglement.

$$(\text{Mobility index}) = T\alpha \times R\alpha/(R\alpha + R\beta) + T\beta \times R\beta/(R\alpha + R\beta) \text{ (Formula I)}$$

$$(\text{Degree of entanglement}) = R\beta/R\alpha \text{ (Formula II)}$$

Method for temperature calibration

<Calibration method>

1. The Heater Power in an apparatus was set to 5%, and calibration straight lines (Formula A) and (Formula B) were obtained by the following procedures. A sample tube for measurement having a diameter of 9 mm and a height of 180 mm is filled with the polyethylene powder until a height of 1 cm from the bottom, and a thermocouple is inserted.

2. The sample tube for measurement is charged into a TD-NMR apparatus (model: minispec mq20) manufactured by Bruker, in which the temperature of the apparatus is set to 0°C.

3. After the charging, the value in the thermocouple after a lapse of 5 minutes is recorded.

4. After a lapse of 10 minutes or more from the charging, the set temperature is set to 10°C to start temperature increase.

5. The value in the thermocouple after a lapse of 5 minutes from the completion of the temperature increase (apparatus temperature = set temperature) is recorded.

6. After a lapse of 10 minutes or more from the temperature increase, the set temperature is set to 20°C to start temperature increase.

7. Thereafter, the procedures (5) and (6) are repeated at an interval of 10°C until the temperature reaches 200°C.

8. The recorded temperature of the thermocouple is plotted on the horizontal axis and the set temperature is plotted on the vertical axis, and linear approximation is performed.

(3) Comonomer content measured by $^{13}$C-NMR

The comonomer (olefin copolymerizable with ethylene) content in the polyethylene powder was calculated from the area intensity with a methylene carbon signal observed in a $^{13}$C-NMR spectrum in measurement by $^{13}$C-NMR in accordance with the method disclosed in G.J.Ray et al, Macromolecules, 10, 773 (1977).

Measurement apparatus: ECS-500 manufactured by JEOL Ltd.

Nucleus to be observed: $^{13}$C

Frequency to be observed: 100.53 MHz

Pulse width: 45° (7.5 $\mu$sec)

Pulse program: single pulse dec

PD: 5 s

Measurement temperature: 130°C

Cumulative number: 30,000 times or more

Standard: PE (-eee-) signal, 29.9 ppm

Solvent: ortho-dichlorobenzene-d4

Sample concentration: 5 to 10 wt%

Dissolution temperature: 130 to 140°C

(4) Ti content and Al content

The Ti and Al contents in the polyethylene powder obtained in each of Examples and Comparative Examples were evaluated by high-frequency plasma mass spectrometry in accordance with JIS K 0133. Preparation of a sample was carried out by pressure-decomposition with nitric acid by using a microwave decomposition apparatus (model ETHOS TC, manufactured by Milestone General K.K.). The element concentration of titanium (Ti) and the element concentration of aluminum (Al) in the sample prepared were measured by the internal standard method using ICP-MS (inductively coupled plasma-mass spectrometer, model X Series X7, manufactured by Thermo Fisher Scientific K.K.), and were determined respectively as the Ti content and the Al content.

(5) Method for measuring $D_{10}$, $D_{50}$ and $D_{90}$

A particle size of the ultrahigh-molecular-weight polyethylene powder obtained in each of Examples and Comparative Examples was measured with a laser diffraction type particle size distribution measurement apparatus (Mastersizer 3000 manufactured by Malvern Panalytical Ltd.). A cumulative particle size distribution from the small particle size side was created based on the measurement, and particle sizes corresponding to 10%, 50% and 90% cumulative particle sizes were respectively sequentially determined as $D_{10}$, $D_{50}$ and $D_{90}$. Measurement was performed continuously 3 times, and an average of three values obtained was adopted.
Dispersion medium: soap water (purified water containing 1 wt% of IGEPAL (registered trademark) CO-630)

<High-strength fiber production method 1>

[Swelling Step]

A high-strength fiber was produced as follows using each ultrahigh-molecular-weight polyethylene powder. 15 parts by mass of the ultrahigh-molecular-weight polyethylene powder, 85 parts by mass of liquid paraffin (liquid paraffin (product name: Smoil P-350P) manufactured by MORESCO Corp.), and 1 part by mass of an antioxidant ((antioxidant (ADK STAB AO-60G) manufactured by ADEKA CORPORATION)) were added per 100 parts by mass in total of the ultrahigh-molecular-weight polyethylene powder and the liquid paraffin, and stirred at a temperature lower by 35°C than the melting point ($T_{m2}$) of the ultrahigh-molecular-weight polyethylene powder for 60 minutes to prepare a liquid in a slurry form.

[Kneading Step]

Next, the liquid in a slurry form was added to liquid paraffin (liquid paraffin (product name: Smoil P-350P) manufactured by MORESCO Corp.) at 160°C, and the resultant was stirred for 2 minutes to prepare a gel having a polymer concentration of 5 parts by mass. The thus obtained gel was charged into Labo Plastomill (unit model: 4C150-01) manufactured by Toyo Seiki Seisaku-sho, Ltd., and kneaded at a screw rotational speed of 10 rpm at a constant temperature of 150°C for 180 minutes to prepare a kneaded gel.

[Spinning Step]

Subsequently, spinning operation was conducted using Capillograph 1D (unit model: PMD-C) manufactured by Toyo Seiki Seisaku-sho, Ltd. The orifice used had a pore diameter of 1.0 mm, a length of 66 mm, and an inflow angle of 90°, and after charging the kneaded gel into a furnace set to 180°C, deaeration operation was conducted for 60 minutes. Thereafter, the extrusion rate was set to 7.5 mm/min for obtaining a discharge amount of 0.35 g/min, and the resultant yarn was collected, after passing through a water bath disposed directly below the orifice tip, at a winding rate of 2.8 m/min. The distance between the orifice tip to the water surface of the water bath was 8 cm, and the temperature of the water bath was set to 20°C.
Thereafter, in order to remove the liquid paraffin from the wound yarn, extraction operation was performed by dipping the yarn in hexane, and the resultant was dried for 24 hours to obtain the yarn.

[Drawing Step]

The thus obtained yarn was primarily drawn at a rate of 20 mm/min in a thermostat bath set to 120°C, and subsequently secondarily drawn at a rate of 10 mm/min in a thermostat bath set to 140°C up to immediately before being broken to obtain a high-strength fiber (drawn thread). The temperature in the thermostat bath was a value obtained by actually measuring the temperature of the center part of the thermostat bath with a thermometer.

<Method for producing high-strength fiber 2>

A high-strength fiber was produced as follows using each ultrahigh-molecular-weight polyethylene powder. 15 parts by mass of the ultrahigh-molecular-weight polyethylene powder, 85 parts by mass of liquid paraffin (liquid paraffin (product name: Smoil P-350P) manufactured by MORESCO Corp.), and 1 part by mass of an antioxidant (tetrakis [methylene(3,5-di-t-butyl-4-hydroxy-hydrocinnamate)]methane (product name: ANOX20) manufactured by Great Lakes Chemical Japan) were added per 100 parts by mass in total of the ultrahigh-molecular-weight polyethylene powder and the liquid paraffin, and stirred at a temperature lower by 35°C than the melting point ($T_{m2}$) of the ultrahigh-molecular-weight polyethylene powder for 60 minutes to prepare a liquid in a slurry form.
Next, the liquid in a slurry form was added to liquid paraffin (liquid paraffin (product name: Smoil P-350P) manufactured by MORESCO Corp.) at 180°C, and the resultant was stirred for 2 minutes to prepare a gel having a polymer concentration of 5 parts by mass. The thus obtained gel was charged into Labo Plastomill (unit model: 4C150-01) manufactured by Toyo Seiki Seisaku-sho, Ltd., and kneaded at a screw rotational speed of 10 rpm at a constant temperature of 150°C for 180 minutes to prepare a kneaded gel.
Subsequently, spinning operation was conducted using Capillograph 1D (unit model: PMD-C) manufactured by Toyo Seiki Seisaku-sho, Ltd. The orifice used had a pore diameter of 1.0 mm, a length of 66 mm, and an inflow angle of 90°, and after charging the kneaded gel into a furnace set to 180°C, deaeration operation was conducted for 60 minutes. Thereafter, the extrusion rate was set to 10 mm/min for obtaining a discharge amount of 0.45 g/min, and the resultant yarn was collected, after passing through a water bath disposed directly below the orifice tip, at a winding rate of 0.8 m/min. The distance between the orifice tip to the water surface of the water bath was 8 cm, and the temperature of the water bath was set to 20°C.
Thereafter, in order to remove the liquid paraffin from the wound yarn, extraction operation was performed by dipping the yarn in hexane, and the resultant was dried for 24 hours.
The thus obtained yarn was primarily drawn at a feeding rate of 100 mm/min and a winding rate of 3000 mm/min in a thermostat bath set to 120°C, and subsequently secondarily drawn at a feeding rate of 100 mm/min and at a rate up to immediately before being broken in a thermostat bath set to 140°C to obtain a high-strength fiber (drawn thread). The drawing step was performed using a heating stretching machine (unit model: IMC-3F08) manufactured by Imoto Machinery Co., Ltd. The temperature in the thermostat bath was a value obtained by actually measuring the temperature of the center part of the thermostat bath with a thermometer.

<Method for producing high-strength fiber 3>

A high-strength fiber was obtained in the same manner as described above in (Method for producing high-strength fiber 2) except that the kneading time with Labo Plastomill (unit model: 4C150-01) manufactured by Toyo Seiki Seisaku-sho, Ltd. was changed to 0 minutes.

[Decomposition Rate of Gel after Kneading]

The intrinsic viscosity IV of the yarn obtained by the aforementioned method was calculated by the method defined above. The intrinsic viscosity of a dried molded product (yarn) was calculated and determined as IV(A). The intrinsic viscosity of an ultrahigh-molecular-weight polyethylene powder before kneading was calculated and determined as IV. The decomposition rate was determined by the following formula from the intrinsic viscosity IV and the intrinsic viscosity IV(A) calculated. The gel decomposition rate was evaluated by the following criteria.
Calculation of decomposition rate:

$$\text{Decomposition rate} = \{IV - IV(A)\}/IV$$

(Evaluation criteria)

◎: a decomposition rate of 0% or more and less than 21%

O: a decomposition rate of 21% or more and less than 51%

△: a decomposition rate of 51% or more and less than 81%

✕: a decomposition rate of 81% or more

[Tensile breaking strength of high-strength fiber]

A high-strength fiber (drawn thread), having a length of 10 m, spun by the method described above was cut at an interval of 1 m, and each of the thus obtained 10 pieces of fiber was pulled at room temperature until it was broken to calculate average breaking strength. At this point, the breaking strength was calculated by dividing a value of the maximum load applied to the fiber by the fineness. Here, the fineness refers to the weight (g) per $1 \times 10^4$ m of the fiber, and was obtained based on the weight of the high-strength fiber having a length of 10 m. As the unit of the fineness, dtex was used. In the measurement of the weight, a scale capable of weighing up to 0.1 mg was used. The tensile breaking strength of the high-strength fiber was evaluated according to the following criteria:

(Evaluation criteria)

☆: the breaking strength of 43 cN/dtex or more

◎: the breaking strength of 30 cN/dtex or more and less than 43 cN/dtex

○: the breaking strength of 25 cN/dtex or more and less than 30 cN/dtex

△: the breaking strength of 20 cN/dtex or more and less than 25 cN/dtex

✕: the breaking strength of less than 20 cN/dtex

[High-speed windability evaluation of high-strength fiber]

Each gel kneaded by the methods described above was subjected to spinning operation using Capillograph 1D (unit model: PMD-C) manufactured by Toyo Seiki Seisaku-sho, Ltd. The orifice used had a pore diameter of 0.5 mm, a length of 5 mm, and an inflow angle of 90°. The spinning conditions involved a temperature of 200°C, an extrusion rate fixed to 20 mm/min, and a winding rate gradually elevated from 3 m/min at an increase rate of 19.7 m/min$^2$. In this respect, a rate at which the thread was broken was measured as a high-speed winding rate, and evaluated according to the evaluation criteria given below on the basis of an average value from five measurements.

(Evaluation criteria)

☆: the high-speed winding rate was 900 m/min or more.

◎: the high-speed winding rate of 700 m/min or more and less than 900 m/min

O: the high-speed winding rate of 400 m/min or more and less than 700 m/min

△: the high-speed winding rate of 200 m/min or more and less than 400 m/min

×: the high-speed winding rate of less than 200 m/min

[Method for synthesizing catalyst]

(1) Synthesis of raw material [a-2]

An 8 l stainless autoclave thoroughly purged with nitrogen was charged with 2,000 mmol of a 6 [Mg(C$_4$H$_9$)$_2$]·Al(C$_2$H$_5$)$_3$ raw material [a-1], the resultant was diluted with hexane, and then a hexane solution containing 800 mmol of n-butanol was added thereto dropwise over 3 hours with stirring at 50°C. After the completion of the dropwise addition, the line was washed with 300 mL of hexane. The reaction was further continued with stirring at 50°C over 2 hours. After the completion of the reaction, the reaction solution was cooled to ordinary temperature and used as raw material [a-2]. The raw material [a-2] had a concentration of 1.0 mol/L in total of magnesium and aluminum.

(2) Synthesis of raw material [a-3]

An 8 L stainless autoclave thoroughly purged with nitrogen was charged with 2,000 mL of the raw material [a-1] (corresponding to 2000 mmol in total of magnesium and aluminum), and pressure-fed with 240 mL of a hexane solution containing 8.33 mol/L methyl hydrogen polysiloxane (manufactured by Shin-Etsu Chemical Co., Ltd.) with stirring at 80°C, and the stirring was further continued at 80°C over 2 hours. After the completion of the reaction, the reaction solution was cooled to ordinary temperature and used as raw material [a-3]. The raw material [a-3] had a concentration of 0.786 mol/L in total of magnesium and aluminum.

(3) Synthesis of carrier [A-1]

An 8 l stainless autoclave thoroughly purged with nitrogen was charged with 1,000 mL of a hexane solution containing 1 mol/l trichlorosilane, and a hexane solution containing the organic magnesium compound corresponding to 943 mmol of magnesium as the raw material [a-2] was added thereto at 65°C dropwise over 3 hours, and the reaction was further continued with stirring at 65°C for 1 hour. After the completion of the reaction, the supernatant was removed, and the resulting solid was washed with 1,800 mL of hexane four times to obtain carrier [A-1]. As a result of analyzing this carrier, the amount of magnesium contained per g of the solid was 7.5 mmol.

(4) Preparation of catalyst [c-1]

To 1,970 mL of the hexane slurry containing 110 g of the carrier [A-1], 103 mL of a hexane solution containing 1 mol/l titanium tetrachloride and 131 ml of the raw material [a-3] were added at the same time over 3 hours with stirring at 10°C. After the addition, the reaction was continued at 10°C for 1 hour. After the completion of the reaction, the supernatant was removed, and unreacted raw material components were removed by washing with hexane four times to prepare solid catalyst component [c-1].

(5) Preparation of catalyst [c-2]

To 1,970 mL of the hexane slurry containing 110 g of the carrier [A-1], 23 mL of a hexane solution containing 1 mol/l titanium tetrachloride and 29 ml of the raw material [a-3] were added at the same time over 3 hours with stirring at 10°C. After the addition, the reaction was continued at 10°C for 1 hour. After the completion of the reaction, the supernatant was removed, and unreacted raw material components were removed by washing with hexane four times. After completion, 23 mL of a hexane solution containing 1 mol/l triethyl aluminum (hereinafter, also referred to as TEA) was added over 1 hour with stirring at 40°C. After the addition, the reaction was continued at 40°C for 1 hour. After the completion of the reaction, the supernatant was removed, and components in the supernatant were removed by washing with hexane four times to prepare solid catalytic component [c-2].

(6) Preparation of catalyst [c-3]

To 1,970 mL of the hexane slurry containing 110 g of the carrier [A-1], 103 mL of a hexane solution containing 1 mol/l titanium tetrachloride and 103 ml of the raw material [a-1] were added at the same time over 3 hours with stirring at 5°C. After the addition, the reaction was continued at 5°C for 1 hour. After the completion of the reaction, the supernatant was removed, and unreacted raw material components were removed by washing with hexane four times. After completion, 103 mL of a hexane solution containing 1 mol/l ethyl aluminum dichloride (hereinafter, also referred to as EADC) was added over 1 hour with stirring at 40°C. After the addition, the reaction was continued at 40°C for 1 hour. After the completion of the reaction, the supernatant was removed, and components in the supernatant were removed by washing with hexane four times to prepare solid catalytic component [c-3].

(7) Preparation of catalyst [c-4]

To 1,970 mL of the hexane slurry containing 110 g of the carrier [A-1], 23 mL of a hexane solution containing 1 mol/l titanium tetrachloride and 23 ml of the raw material [a-1] were added at the same time over 3 hours with stirring at 5°C. After the addition, the reaction was continued at 5°C for 1 hour. After the completion of the reaction, the supernatant was removed, and unreacted raw material components were removed by washing with hexane four times. After completion, 23 mL of a hexane solution containing 1 mol/l ethyl aluminum dichloride (hereinafter, also referred to as EADC) was added over 1 hour with stirring at 40°C. After the addition, the reaction was continued at 40°C for 1 hour. After the completion of the reaction, the supernatant was removed, and components in the supernatant were removed by washing with hexane four times to prepare solid catalytic component [c-4].

Modifications in catalyst synthesis were summarized below.

[Table 1]

| | | c-1 | c-2 | c-3 | c-4 |
|---|---|---|---|---|---|
| Catalyst synthesis conditions | Amount (ml) of 1 mol/l titanium tetrachloride added | 103 | 23 | 103 | 23 |
| | Organic magnesium compound | a-3 | a-3 | a-1 | a-1 |
| | Amount (ml) of organic magnesium added | 131 | 29 | 103 | 23 |
| | Surface treatment of organic aluminum | No treatment | TEA | EADC | EADC |

(8) Synthesis of promoter [b-2]

A 300 mL glass container thoroughly purged with nitrogen was charged with 180 ml of hexane solution [b-1] containing 1.0 mol/L triisobutyl aluminum and diisobutyl aluminum hydride (9:1 mixture), and 30 ml of a hexane solution containing 1.0 mol/L TEA was added dropwise over 30 minutes with stirring at 30°C. After the dropwise addition, the reaction was continued for 30 minutes. Promoter [b-2] was obtained.

(9) Synthesis of promoter [b-3]

A 300 mL glass container thoroughly purged with nitrogen was charged with 100 ml of a hexane solution containing 1.0 mol/L TEA, and 90 ml of a hexane solution containing 1.0 mol/L dibutylhydroxytoluene was added dropwise over 30 minutes with stirring at 0°C. After the dropwise addition, the reaction was continued for 30 minutes. Bulky promoter [b-3] was obtained.

(Example 1)

<Polymerization of polyethylene powder>

A 1.5 L stainless autoclave polymerization reactor thoroughly purged with nitrogen was used to perform polymerization of a polyethylene powder by a method shown below.

First, a polymerization reactor heated to 75°C was charged with 800 mL of hexane as a solvent, and 0.5 mmol/L organic metal compound component (b-2) was added as a promoter. Next, ethylene was added such that the internal pressure was 0.397 MPa, and hydrogen was further added such that the internal pressure was 0.400 MPa. Furthermore, 10.0 mg of the catalyst [c-4] was added. The internal temperature was kept at 75°C, and polymerization was performed for 90 minutes with stirring at a stirring speed of 1000 rpm. During the polymerization, the internal pressure was kept at 0.400 MPa by supplying ethylene as needed. After the completion of the polymerization, a reaction mixture (polymer slurry) was taken out from the polymerization reactor and the catalyst was inactivated with methanol. The polymer slurry was filtrated with a 500-mesh (aperture size 26 μm) to obtain a polyethylene powder. The obtained polyethylene powder was dried at 40°C for 24 hours. The polymerization activity in the polymerization reactor was 6,000 g per g of the catalyst.

Scales and an extremely coarse powder were removed using a sieve having an aperture size of 425 μm, and the physical property evaluation of the polyethylene powder was carried out.

Polyethylene powder (A) and a fiber of polyethylene powder (A), produced by <High-strength fiber production methods 1 to 3> described above, were variously evaluated as described above, and the results are shown in Table 3.

(Examples 2 to 15 and Comparative Examples 1, 2 and 4)

Each polyethylene powder and its fiber were produced in the same manner as in Example 1 except that the polymerization conditions were changed as in Tables 2 and 4, and these were variously evaluated as described above. The results are shown in Tables 3 and 5. In each of Examples 14 and 15, 1-butene as a comonomer (designated as "CM" in the Tables.) was copolymerized.

(Example 16)

<Polymerization of polyethylene powder (B)>

Hexane, ethylene, and a catalyst were continuously supplied to a vessel-type 300 L polymerization reactor equipped with a stirring blade of three sweptback blades, and three baffle plates. The polymerization pressure was 0.4 MPa. The polymerization temperature was kept at 60°C by jacket cooling. The hexane was supplied at 40 L/hour from the bottom of a polymerization vessel, and the average retention time was 120 minutes. The catalyst [c-3] was used as a polymerization catalyst, and supplied such that the generation speed of a polyethylene powder was 10.0 kg/hour. The solution [b-1] (triisobutyl aluminum and diisobutyl aluminum hydride (9:1 mixture)) was used as a promoter component, and supplied at 10 mmol/hour. No hydrogen was supplied. STATSAFE3000 (90 g /L) diluted with n-hexane was added to the polymerization catalyst in an amount of 25 ppm by mass relative to the generation speed of a polyethylene powder. The stirring speed was 230 rpm.

The polymerization slurry in the polymerization reactor was guided to an intermediate flush tank at a pressure of 0.05 MPaG and a temperature of 40°C such that the level in the polymerization reactor was constantly kept, and unreacted ethylene was separated. The polymerization slurry was continuously sent to a centrifuge machine with a pump from the flush tank, the polymer and the solvent were separated, and then the separated polyethylene powder was sent to a rotary kiln-type dryer controlled to 70°C and dried with nitrogen blowing. In this drying step, steam was sprayed to the polyethylene powder to inactivate the catalyst and the promoter. A sieve having an aperture size of 425 μm was used to sift the thus obtained polyethylene powder, and a powder not passing through the sieve was removed to obtain a polyethylene powder. The polymerization activity in the polymerization reactor was 21,000 g per g of the catalyst.

The results are shown in Tables 4 and 5.

(Comparative Example 3)

Preparation of catalyst [c-5]

A 1.5 L autoclave was used to perform preliminary polymerization with 20 g of the catalyst [c-1]. 800 mL of n-hexane was used as a solvent, 0.4 mmol of the solution [b-1] (triisobutyl aluminum and diisobutyl aluminum hydride (9:1 mixture)) was used as a promoter component, and 20 mol% of hydrogen (molar ratio: hydrogen/(ethylene + hydrogen)) was supplied. The polymerization temperature was 20°C, and ethylene was supplied such that 5 g of polyethylene per g of the catalyst [c-1] was generated. After the completion of the polymerization, the supernatant was removed, and unreacted raw material components were removed by washing with hexane four times to prepare catalyst [c-5].

A vessel-type 300 L polymerization reactor equipped with a stirring blade of three sweptback blades, and three baffle plates was used to perform polymerization of a polyethylene powder. n-Hexane was supplied as a solvent at a flow rate of 40 L/hour, the total amount of liquid was adjusted such that the slurry concentration was 30% by mass, and the stirring speed was 550 rpm. Ziegler-Natta catalyst [c-5] was used as a polymerization catalyst, and supplied such that the generation speed of a polyethylene powder was 9 kg/hour. STATSAFE3000 (90 g /L) diluted with n-hexane was added to the polymerization catalyst in an amount of 20 ppm by mass relative to the generation speed of a polyethylene powder. The solution [b-1] (triisobutyl aluminum and diisobutyl aluminum hydride (9:1 mixture)) was used as a promoter component, and supplied at 10 mmol/hour. 1.0 mol% of hydrogen (molar ratio: hydrogen/(ethylene + hydrogen)) was supplied. The polymerization temperature was 78°C, the polymerization pressure was 0.3 MPaG, and the average retention time was 3.0 hours. The polymerization slurry in the polymerization reactor was guided to a flush tank at a pressure of 0.05 MPaG and a temperature of 70°C such that the level in the polymerization reactor was constantly kept, and unreacted ethylene and hydrogen were separated. Next, the polymerization slurry was continuously sent to a centrifuge machine with a pump from the flush tank, the polymer and the solvent were separated, and then the separated polyethylene powder was sent to a rotary kiln-type dryer controlled to 90°C and dried with nitrogen blowing. In this drying step, steam was sprayed to the polyethylene powder to inactivate the catalyst and the promoter.

The results are shown in Tables 4 and 5.

[Table 2]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Polymerization conditions | Reactor volume (L) | 1.5 | 1.5 | 1.5 | 1.5 | 1.5 | 1.5 | 1.5 | 1.5 | 1.5 | 1.5 |
| | Polymerization temperature (°C) | 75 | 75 | 40 | 38 | 80 | 60 | 73 | 60 | 52 | 55 |
| | Polymerization pressure (MPa) | 0.4 | 0.4 | 0.7 | 0.7 | 0.4 | 0.4 | 0.4 | 0.4 | 0.4 | 0.4 |
| | Stirring speed (rpm) | 1000 | 1000 | 1000 | 1000 | 1000 | 1000 | 1000 | 1000 | 1000 | 1000 |
| | Internal pressure (MPa) of ethylene | 0.397 | 0.400 | 0.700 | 0.700 | 0.400 | 0.400 | 0.400 | 0.400 | 0.400 | 0.400 |
| | Internal pressure (MPa) of hydrogen | 0.003 | 0.000 | 0.000 | 0.000 | 0.000 | 0.000 | 0.000 | 0.000 | 0.000 | 0.000 |
| | Internal pressure (MPa) of CM | 0.0000 | 0.0000 | 0.0000 | 0.0000 | 0.0000 | 0.0000 | 0.0000 | 0.0000 | 0.0000 | 0.0000 |
| | Type of catalyst | c-4 | c-4 | c-4 | c-4 | c-1 | c-1 | c-3 | c-3 | c-3 | c-2 |
| | Type of promoter | b-2 | b-3 | b-2 | b-3 | b-3 | b-3 | b-1 | b-1 | b-2 | b-3 |
| | Polymerization retention time (min) | 90 | 90 | 90 | 90 | 90 | 90 | 90 | 90 | 90 | 90 |
| | Amount (mg) of catalyst | 10 | 10 | 50 | 50 | 10 | 10 | 10 | 30 | 30 | 30 |
| | Drying temperature (°C) | 40 | 40 | 40 | 40 | 40 | 40 | 40 | 40 | 40 | 40 |
| | Drying time (h) | 24 | 24 | 24 | 24 | 24 | 24 | 24 | 24 | 24 | 24 |
| | Catalyst activity (g-PF/g- catalyst) | 6000 | 9000 | 7000 | 4000 | 15000 | 9000 | 60000 | 19000 | 12000 | 7000 |

[Table 3]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Polyethylene powder | Intrinsic viscosity IV (dL/g) | 12.8 | 20.4 | 32.0 | 32.6 | 17.1 | 25.7 | 21.5 | 26.7 | 29.9 | 28.7 |
| | Mobility index (ms) of slurry | 70 | 72 | 68 | 67 | 65 | 65 | 66 | 65 | 65 | 67 |
| | Degree of entanglement in slurry | 1.1 | 1.2 | 2.3 | 2.6 | 1.3 | 1.6 | 1.4 | 1.7 | 1.9 | 2.1 |
| | Abundance proportion of low-mobility component $\alpha$ | 17 | 16 | 11 | 9 | 16 | 14 | 15 | 13 | 12 | 11 |
| | Abundance proportion of intermediate component $\beta$ | 19 | 20 | 25 | 27 | 20 | 22 | 21 | 23 | 24 | 25 |
| | Content (ppm) of titanium (Ti) | 5.3 | 2.5 | 4.8 | 6.1 | 2.2 | 2.7 | 3.2 | 3.4 | 3.6 | 4.1 |
| | Content (ppm) of aluminum (Al) | 3.6 | 2.9 | 3.3 | 4.7 | 3.1 | 4.0 | 3.6 | 3.2 | 3.3 | 3.9 |
| | D10 ($\mu$m) | 61 | 64 | 37 | 36 | 78 | 60 | 83 | 72 | 57 | 38 |
| | D50 ($\mu$m) | 115 | 122 | 65 | 61 | 143 | 121 | 183 | 155 | 105 | 89 |
| | D90 ($\mu$m) | 230 | 204 | 145 | 152 | 206 | 188 | 260 | 209 | 174 | 162 |
| Fiber production method 1 | Gel decomposition rate after kneading | ◎ | ◎ | ○ | ○ | ◎ | ◎ | ◎ | ◎ | ◎ | ◎ |
| | Winding rate at break of thread | ○ | ○ | ◎ | ○ | ◎ | ◎ | ◎ | ◎ | ◎ | ◎ |
| | Tensile strength of fiber | △ | O | ☆ | ○ | ○ | ◎ | ○ | ◎ | ☆ | ☆ |
| Fiber production method 2 | Gel decomposition rate after kneading | ◎ | ◎ | ○ | ○ | ◎ | ◎ | ◎ | ◎ | ◎ | ◎ |
| | Winding rate at break of thread | ○ | ○ | ◎ | ○ | ☆ | ◎ | ◎ | ◎ | ◎ | ◎ |
| | Tensile strength of fiber | ○ | ◎ | ☆ | ◎ | ◎ | ☆ | ◎ | ☆ | ☆ | ☆ |
| Fiber production method 3 | Gel decomposition rate after kneading | ◎ | ◎ | ○ | ○ | ◎ | ◎ | ◎ | ◎ | ◎ | ◎ |
| | Winding rate at break of thread | ○ | ◎ | ◎ | ○ | ☆ | ◎ | ◎ | ◎ | ◎ | ◎ |
| | Tensile strength of fiber | ○ | ○ | ☆ | ◎ | ◎ | ☆ | ◎ | ☆ | ☆ | ☆ |

[Table 4]

| | | Example 11 | Example 12 | Example 13 | Example 14 | Example 15 | Example 16 | Comparative Example 1 | Comparative Example 2 | Comparative Example 3 | Comparative Example 4 |
|---|---|---|---|---|---|---|---|---|---|---|---|
| Polymerization conditions | Reactor volume (L) | 1.5 | 1.5 | 1.5 | 1.5 | 1.5 | 300 | 1.5 | 1.5 | 300 | 1.5 |
| | Polymerization temperature (°C) | 76 | 58 | 38 | 76 | 60 | 60 | 78 | 40 | 78 | 60 |
| | Polymerization pressure (MPa) | 0.4 | 0.4 | 0.7 | 0.4 | 0.4 | 0.4 | 0.4 | 0.7 | 0.3 | 0.4 |
| | Stirring speed (rpm) | 1000 | 1000 | 1000 | 1000 | 1000 | 230 | 1000 | 1000 | 1000 | 1000 |
| | Internal pressure (MPa) of ethylene | 0.400 | 0.400 | 0.700 | 0.400 | 0.399 | 0.400 | 0.364 | 0.700 | 0.297 | 0.400 |
| | Internal pressure (MPa) of hydrogen | 0.000 | 0.000 | 0.000 | 0.000 | 0.000 | 0.000 | 0.036 | 0.000 | 0.003 | 0.000 |
| | Internal pressure (MPa) of CM | 0.0000 | 0.0000 | 0.0000 | 0.0004 | 0.0008 | 0.0000 | 0.0000 | 0.0000 | 0.0000 | 0.0000 |
| | Type of catalyst | c-2 | c-2 | c-2 | c-2 | c-3 | c-3 | c-1 | c-1 | c-5 | c-1 |
| | Type of promoter | b-2 | b-2 | b-2 | b-2 | b-2 | b-1 | b-1 | b-1 | b-1 | b-1 |
| | Polymerization retention time (min) | 90 | 90 | 90 | 90 | 90 | 120 | 90 | 90 | 180 | 90 |
| | Amount (mg) of catalyst | 10 | 30 | 50 | 10 | 30 | 0.2g/h | 30 | 30 | 0.5g/h | 30 |
| | Drying temperature (°C) | 40 | 40 | 40 | 40 | 40 | 70 | 40 | 40 | 90 | 40 |
| | Drying time (h) | 24 | 24 | 24 | 24 | 24 | 2 | 24 | 24 | 2 | 24 |

(continued)

| | Example 11 | Example 12 | Example 13 | Example 14 | Example 15 | Example 16 | Comparative Example 1 | Comparative Example 2 | Comparative Example 3 | Comparative Example 4 |
|---|---|---|---|---|---|---|---|---|---|---|
| Catalyst activity (g-PE/g- catalyst) | 18000 | 11000 | 6000 | 24000 | 17000 | 21000 | 13000 | 3000 | 18000 | 8000 |

[Table 5]

| | | Example 11 | Example 12 | Example 13 | Example 14 | Example 15 | Example 16 | Comparative Example 1 | Comparative Example 2 | Comparative Example 3 | Comparative Example 4 |
|---|---|---|---|---|---|---|---|---|---|---|---|
| Polyethylene powder | Intrinsic viscosity IV (dL/g) | 18.0 | 27.5 | 32.9 | 26.5 | 27.7 | 28.0 | 4.5 | 35.5 | 11.3 | 26.5 |
| | Mobility index (ms) of slurry | 61 | 61 | 58 | 65 | 70 | 66 | 73 | 54 | 63 | 56 |
| | Degree of entanglement in slurry | 0.7 | 1.5 | 1.8 | 1.7 | 2.2 | 1.6 | 0.4 | 1.1 | 0.6 | 0.7 |
| | Abundance proportion of low-mobility component $\alpha$ | 21 | 14 | 13 | 13 | 11 | 14 | 26 | 17 | 23 | 21 |
| | Abundance proportion of intermediate component $\beta$ | 15 | 22 | 23 | 23 | 25 | 22 | 10 | 19 | 13 | 15 |
| | Content (ppm) of titanium (Ti) | 3.4 | 2.8 | 4.8 | 4.1 | 3.0 | 2.2 | 3.4 | 7.0 | 2.7 | 4.6 |
| | Content (ppm) of aluminum (Al) | 3.2 | 3.1 | 2.9 | 2.4 | 3.6 | 1.2 | 2.8 | 9.0 | 2.3 | 3.3 |
| | D10 ($\mu$m) | 76 | 71 | 35 | 68 | 59 | 70 | 90 | 32 | 81 | 87 |
| | D50 ($\mu$m) | 148 | 121 | 72 | 141 | 117 | 142 | 142 | 58 | 118 | 123 |
| | D90 ($\mu$m) | 201 | 188 | 121 | 197 | 184 | 183 | 197 | 130 | 167 | 191 |
| Fiber production method 1 | Gel decomposition rate after kneading | ○ | ○ | ○ | Δ | Δ | ◎ | ◎ | Δ | ○ | Δ |
| | Winding rate at break of thread | Δ | Δ | Δ | ○ | Δ | ◎ | × | x | ○ | × |
| | Tensile strength of fiber | Δ | ○ | Δ | Δ | Δ | ◎ | Unspinnable | Unspinnable | × | Δ |

(continued)

| | | Example 11 | Example 12 | Example 13 | Example 14 | Example 15 | Example 16 | Comparative Example 1 | Comparative Example 2 | Comparative Example 3 | Comparative Example 4 |
|---|---|---|---|---|---|---|---|---|---|---|---|
| Fiber production method 2 | Gel decomposition rate after kneading | ○ | ○ | ○ | Δ | Δ | ◎ | | | | |
| | Winding rate at break of thread | Δ | Δ | Δ | ○ | Δ | ◎ | | | | |
| | Tensile strength of fiber | Δ | ○ | ○ | Δ | Δ | ☆ | | | | |
| Fiber production method 3 | Gel decomposition rate after kneading | ○ | ○ | ○ | Δ | Δ | ◎ | | | | |
| | Winding rate at break of thread | Δ | Δ | Δ | ○ | Δ | ◎ | | | | |
| | Tensile strength of fiber | Δ | ○ | ○ | Δ | Δ | ☆ | | | | |

## Industrial Applicability

The polyethylene powder of the present invention has industrial applicability as a raw material for various molded articles, microporous membranes, separators for batteries, and fibers.

## Claims

1. An ultrahigh-molecular-weight polyethylene powder,

   having intrinsic viscosity IV of 12.0 dL/g or more and 35.0 dL/g or less, and
   having a mobility index of 57 ms or more and 73 ms or less, as determined from the following (formula I):

$$[\text{Mobility Index}] = T\alpha \times R\alpha/(R\alpha + R\beta) + T\beta \times R\beta/(R\alpha + R\beta) \quad \text{(Formula I)}$$

   wherein
   $T\alpha$ represents a relaxation time (ms) of a low-mobility component $\alpha$,
   $R\alpha$ represents an abundance proportion of the low-mobility component $\alpha$,
   $T\beta$ represents a relaxation time (ms) of an intermediate component $\beta$,
   $R\beta$ represents an abundance proportion of the intermediate component $\beta$, and
   the $T\alpha$, $R\alpha$, $T\beta$ and $R\beta$ are values obtained by approximating a free induction decay curve obtained by the Carr Purcell Meiboom Gill method with pulse NMR, to three components of the low-mobility component $\alpha$, the intermediate component $\beta$ and a high-mobility component $\gamma$.

2. The ultrahigh-molecular-weight polyethylene powder according to claim 1, having a degree of entanglement of 0.6 or more and 2.8 or less, as determined from the following (formula II):

$$[\text{Degree of Entanglement}] = R\beta/R\alpha \quad \text{(Formula II)}$$

   wherein $R\beta$ and $R\alpha$ are as described in claim 1.

3. The ultrahigh-molecular-weight polyethylene powder according to claim 1 or 2, satisfying a relationship of the following (formula III):

$$[\text{Mobility Index}] > -0.2 \times [\text{Intrinsic Viscosity IV}] + 62 \quad \text{(Formula III)}.$$

4. The ultrahigh-molecular-weight polyethylene powder according to claim 1 or 2, wherein a content of a constituent unit derived from an olefin copolymerizable with ethylene, as measured by $^{13}$C-NMR, is 0.1 mol% or less.

5. The ultrahigh-molecular-weight polyethylene powder according to claim 1 or 2, having D50 of 40 μm or more and 400 μm or less, as measured with a laser diffraction type particle size distribution measurement apparatus.

6. The ultrahigh-molecular-weight polyethylene powder according to claim 1 or 2, having intrinsic viscosity IV of 17.0 dL/g or more and 33.0 dL/g or less.

7. The ultrahigh-molecular-weight polyethylene powder according to claim 1 or 2, having a mobility index of 64 ms or more and 73 ms or less.

8. The ultrahigh-molecular-weight polyethylene powder according to claim 1 or 2, wherein

   a content of titanium (Ti) is 10 ppm or less, and
   a content of aluminum (Al) is 10 ppm or less.

9. The ultrahigh-molecular-weight polyethylene powder according to claim 1 or 2, for a high-strength fiber.

10. A molded article of the ultrahigh-molecular-weight polyethylene powder according to claim 1 or 2.

**11.** The molded article according to claim 10, wherein
the molded article is a fiber.

**12.** A method for producing a high-strength fiber, comprising:

a slurry preparing step of mixing an ultrahigh-molecular-weight polyethylene powder and first liquid paraffin, and stirring the resulting mixture at a temperature equal to or lower than a melting point of the ultrahigh-molecular-weight polyethylene powder to thereby obtain a slurry;
a gelling step of mixing the slurry and second liquid paraffin having a temperature of 150°C or more and 300°C or less to obtain a gel for a yarn having a temperature of 140°C or more and 200°C or less;
an extruding step of extruding the gel for a yarn to obtain a yarn;
an extracting step of extracting the first liquid paraffin and the second liquid paraffin from the yarn to obtain a yarn for drawing; and
a yarn drawing step of thermally drawing the yarn for drawing, wherein
the ultrahigh-molecular-weight polyethylene powder has intrinsic viscosity IV of 12.0 dL/g or more and 35.0 dL/g or less, and
the ultrahigh-molecular-weight polyethylene powder has a mobility index of 57 ms or more and 73 ms or less, as determined from the following (formula I):

$$[\text{Mobility Index}] = T\alpha \times R\alpha/(R\alpha + R\beta) + T\beta \times R\beta/(R\alpha + R\beta) \text{ (Formula I)}$$

wherein
$T\alpha$ represents a relaxation time (ms) of a low-mobility component $\alpha$,
$R\alpha$ represents an abundance proportion of the low-mobility component $\alpha$,
$T\beta$ represents a relaxation time (ms) of an intermediate component $\beta$,
$R\beta$ represents an abundance proportion of the intermediate component $\beta$, and
the $T\alpha$, $R\alpha$, $T\beta$ and $R\beta$ are values obtained by approximating a free induction decay curve obtained by the Carr Purcell Meiboom Gill method with pulse NMR, to three components of the low-mobility component $\alpha$, the intermediate component $\beta$ and a high-mobility component $\gamma$.

**13.** The method for producing a high-strength fiber according to claim 12, comprising a kneading step of kneading the gel for a yarn before the extruding step.

# INTERNATIONAL SEARCH REPORT

| | International application No. |
|---|---|
| | **PCT/JP2024/023800** |

## A. CLASSIFICATION OF SUBJECT MATTER

*C08F 10/02*(2006.01)i; *D01F 6/04*(2006.01)i
FI: C08F10/02; D01F6/04 B

According to International Patent Classification (IPC) or to both national classification and IPC

## B. FIELDS SEARCHED

Minimum documentation searched (classification system followed by classification symbols)

C08F10/02; D01F6/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | WO 2022/113794 A1 (ASAHI KASEI KABUSHIKI KAISHA) 02 June 2022 (2022-06-02) entire text | 1-13 |
| A | JP 2012-229417 A (ASAHI KASEI CHEMICALS CORPORATION) 22 November 2012 (2012-11-22) entire text | 1-13 |
| A | JP 2012-025817 A (ASAHI KASEI CHEMICALS CORPORATION) 09 February 2012 (2012-02-09) entire text | 1-13 |
| A | JP 2018-115341 A (TOSOH CORP.) 26 July 2018 (2018-07-26) entire text | 1-13 |
| A | WO 2021/153520 A1 (ASAHI KASEI KABUSHIKI KAISHA) 05 August 2021 (2021-08-05) entire text, all drawings | 1-13 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 August 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/023800**

| C. | DOCUMENTS CONSIDERED TO BE RELEVANT | |
|---|---|---|
| Category* | Citation of document, with indication, where appropriate, of the relevant passages | Relevant to claim No. |
| A | JP 2020-016007 A (ASAHI KASEI KABUSHIKI KAISHA) 30 January 2020 (2020-01-30) entire text | 1-13 |
| A | JP 2017-508837 A (BOREALIS AG) 30 March 2017 (2017-03-30) entire text, all drawings | 1-13 |

Form PCT/ISA/210 (second sheet) (July 2022)

### INTERNATIONAL SEARCH REPORT
#### Information on patent family members

International application No.

**PCT/JP2024/023800**

| Patent document cited in search report | | | Publication date (day/month/year) | Patent family member(s) | | | Publication date (day/month/year) |
|---|---|---|---|---|---|---|---|
| WO | 2022/113794 | A1 | 02 June 2022 | US | 2023/0407064 | A1 | |
| | | | | whole document | | | |
| | | | | EP | 4253429 | A1 | |
| | | | | CN | 116391296 | A | |
| | | | | KR | 10-2023-0091968 | A | |
| JP | 2012-229417 | A | 22 November 2012 | (Family: none) | | | |
| JP | 2012-025817 | A | 09 February 2012 | (Family: none) | | | |
| JP | 2018-115341 | A | 26 July 2018 | (Family: none) | | | |
| WO | 2021/153520 | A1 | 05 August 2021 | US | 2023/0056794 | A1 | |
| | | | | whole document | | | |
| | | | | EP | 4098669 | A1 | |
| | | | | CN | 114466871 | A | |
| | | | | KR | 10-2022-0092915 | A | |
| JP | 2020-016007 | A | 30 January 2020 | US | 2020/0017614 | A1 | |
| | | | | whole document | | | |
| | | | | CN | 110714231 | A | |
| JP | 2017-508837 | A | 30 March 2017 | US | 2016/0340449 | A1 | |
| | | | | whole document | | | |
| | | | | WO | 2015/121162 | A1 | |
| | | | | EP | 2907829 | A1 | |
| | | | | KR | 10-2016-0070112 | A | |
| | | | | CN | 105658684 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019187727 A

- DE 3127133

**Non-patent literature cited in the description**

- **G.J.RAY et al.** *Macromolecules*, 1977, vol. 10, 773